Europäisches Patentamt

European Patent Office

Office européen des brevets

(19)

(11) Publication number : **0 679 036 A2**

(12) **EUROPEAN PATENT APPLICATION**

(21) Application number : **95302704.2**

(22) Date of filing : **21.04.95**

(51) Int. Cl.⁶ : **H04N 9/31**

(30) Priority : **21.04.94 JP 83526/94**

(43) Date of publication of application :
**25.10.95 Bulletin 95/43**

(84) Designated Contracting States :
**DE FR GB**

(71) Applicant : **SEIKO INSTRUMENTS INC.**
**8 Nakase 1-chome,**
**Mihama-ku**
**Chiba-shi, Chiba 261 (JP)**

(72) Inventor : **Tachibana, Masao, c/o Seiko**
**Instruments Inc.**
**8, Nakase 1-chome, Mihama-ku**
**Chiba-shi, Chiba (JP)**

Inventor : **Iwaki, Tadao, c/o Seiko Instruments**
**Inc.**
**8, Nakase 1-chome, Mihama-ku**
**Chiba-shi, Chiba (JP)**
Inventor : **Mitsuoka, Yasuyuki, c/o Seiko**
**Instruments Inc.**
**8, Nakase 1-chome, Mihama-ku**
**Chiba-shi, Chiba (JP)**
Inventor : **Kasama, Nobuyuki, c/o Seiko**
**Instruments Inc.**
**8, Nakase 1-chome, Mihama-ku**
**Chiba-shi, Chiba (JP)**
Inventor : **Ariga, Toru, c/o Seiko Instruments**
**Inc.**
**8, Nakase 1-chome, Mihama-ku**
**Chiba-shi, Chiba (JP)**

(74) Representative : **Rees, Alexander Ellison et al**
**J. Miller & Co.**
**34 Bedford Row**
**Holborn**
**GB-London WC1R 4JH (GB)**

(54) **Image output apparatus.**

(57) An object of the present invention is to provide an image output apparatus having the function of adjusting the quality of an input image according to the intended purpose while avoiding the missing of the high-frequency component taking place due to the scanning of the input image.

The output target image 101 is formed on the write surface of the optical write type spatial optical modulator 103 by means of the input optical system 102. The input image resulting from the light beam 108 which forms an image on the write surface of the optical write type spatial optical modulator 103 is modulated by the modulation characteristics of the spatial optical modulators controlled by the optical modulation characteristic control circuit 105 included in the drive circuit 104 and appears on the read surface of the optical write type liquid crystal spatial optical modulator. This modulated image is readout by the light beam 109 for forming an output image and is formed as the output image 107 on the final output surface of the apparatus as a whole by means of the output optical system 106.

The deterioration of input image information is corrected and the quality of the output image can be adjusted according to the intended purpose.

FIG. 1

101  102  108  103  109  106  107

104  105

EP 0 679 036 A2

The present invention relates to an image output apparatus which fetches image information such as small-sized bodies, documents, negative and reversal photo-films, photo-prints, exposure mask patterns and the like and outputs such information. The word outputting used herein includes a case where an image is directly displayed on a screen as a display device for a visual observation, a case where an image is projected on any suitable medium like photographic paper, and a photographic film and recording paper for the purpose of making a so called hard copy and further, a case where image information displayed on a display device is transmitted, as an input, to an image processing device and a measuring device that follow.

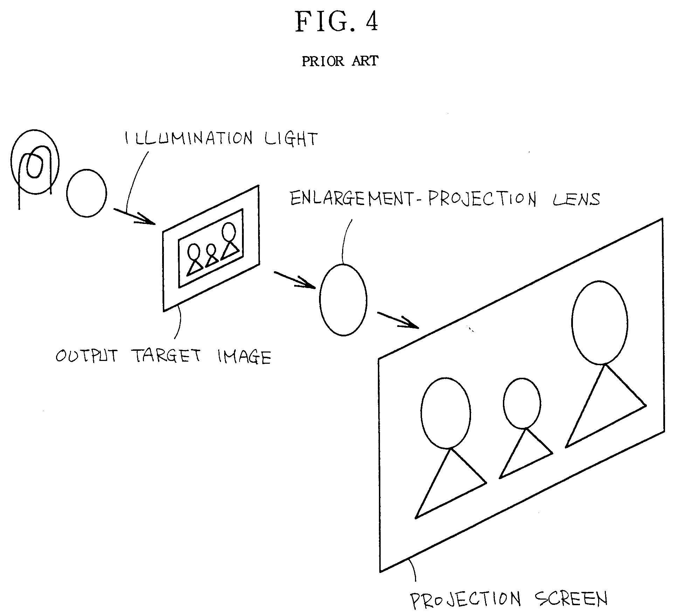

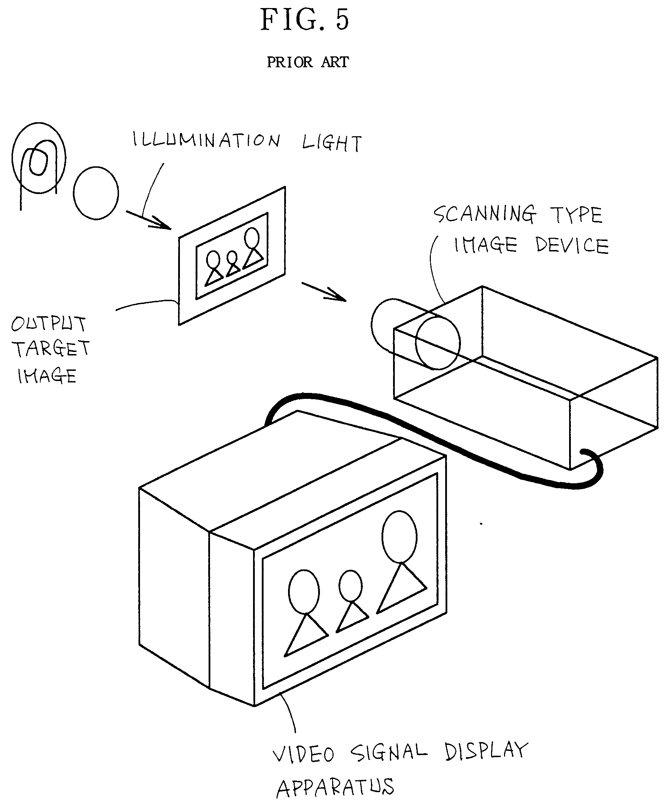

Conventionally, as shown in Fig. 4, an apparatus for displaying image information recorded on a transparent body such as a reversal photographic film or a so called OHP sheet through transmitted illumination and enlargement-projection for easy viewing is already being widely used. Further, a negative film enlarging machine for printing an enlargement-projected image directly on a photographic sheet of paper is also being widely used. A mask exposure apparatus for exposing a mask pattern to a semiconductor wafer is of substantially the same structure as the above-mentioned apparatuses although the quality of the target object and the wavelength of light used differ to some degree. Further, There also exists an apparatus for displaying information recorded on a small-sized body or an opaque body such as a document or a photographic print by enlargement-projection making use of reflected illumination. In addition, as shown in Fig. 5, an apparatus is also sold in the market which when fetching image information, the image information is once converted into scanned video information by using a scanning type imaging device such as a pickup tube or CCD and then the converted video information is inputted to a display device such as a CRT or a liquid crystal display panel for display. Moreover, an apparatus also exists which in order to obtain an enlargement-projected display of high brightness, a target image is once inputted to a spatial optical modulator and the image is read out with a powerful light source so that the image may be displayed in a substantial light-amplified state and particularly, an apparatus using an optical write type liquid crystal spatial optical modulator is disclosed in Japanese Patent Publication No. H4-33016.

Further, a conventional image output apparatus for forming an image on the recording paper of a printer or a copying machine will be described by referring to the accompanying drawings.

Generally, the above-mentioned image output apparatus is formed of an image input system, an image writing system and an image recording system.

The image input system reads optical information passed through, or reflected from, an inputted image medium (hereinafter referred to the "original") such as a document, photograph, film or the like by converting the optical information into an electrical signal. The image writing system writes an image of the original (hereinafter referred to as the "original image") read out by the image input system on a functional medium as a latent image by using an optical or thermal recording means. Then the image recording system visualizes on a recording medium such as recording paper the latent image of the original image which has been written on the functional medium by the image writing system.

A conventional image output apparatus using an electronic photographic recording system in the image recording system will now be described.

The image input system and the image writing system are roughly classified into analog and digital types.

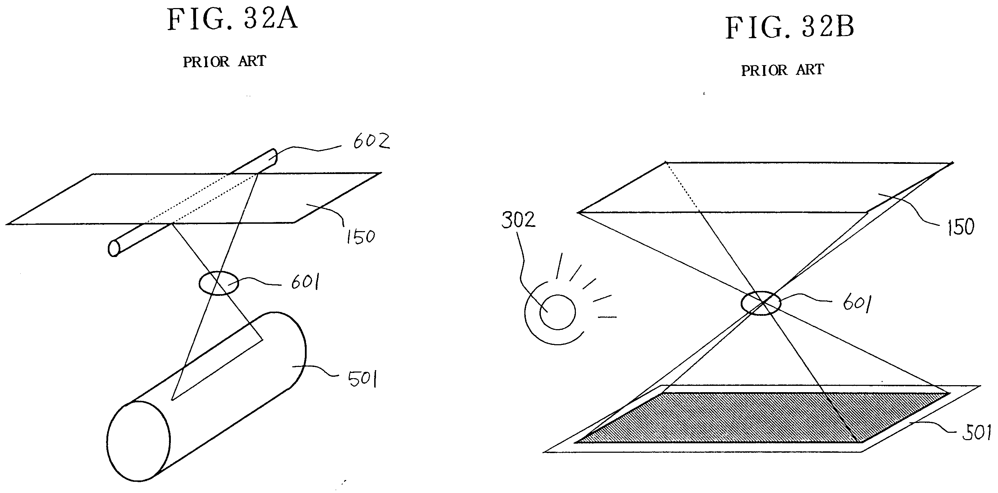

The analog type image input system exposes an original to the illumination by a filament light source such as a fluorescent lamp or a halogen lamp and reads an image of the original formed of the resultant reflected or transmitted light. Many analog type systems have been proposed which are roughly classified into a system as shown in Fig. 32(a) in which the surface of the original is slit-exposed by scanning the surface with a slit and a system as shown in Fig. 32(b) in which an original image is wholly exposed to a planar sensitive body. For slit-exposure, there are two methods of which one is performed in such a manner that the original is held stationary while the optical system is moved and the other is performed in such a manner that the original is moved while the optical system is held stationary. These methods can be selected according to the intended purposes under the conditions that the original, the optical system and the sensitive body are held stationary or moved and the projected image is a normal image or mirror image.

Further, the analog type image writing system operates such that as shown in Figs. 32(a) and 32(b), the light beam of the original image read out by the image input system is applied to the surface of the photosensitive body as a functional medium, through the optical system.

The digital type image input system operates such that the original is exposed by illumination, the original image formed of the resultant reflected or transmitted light is photoelectrically converted to a digital signal. A scanning method for reading the original are roughly classified into three kinds of: a dot scanning system including a cylindrical scanning, prism fiber tube scanning, rotary polygon mirror scanning, galvano-mirror scanning, rectilinear-circular conversion optical fiber scanning and rotary aperture scanning; a line scanning system using a compact image sensor or equimagnification type image sensor; and a surface scanning system.

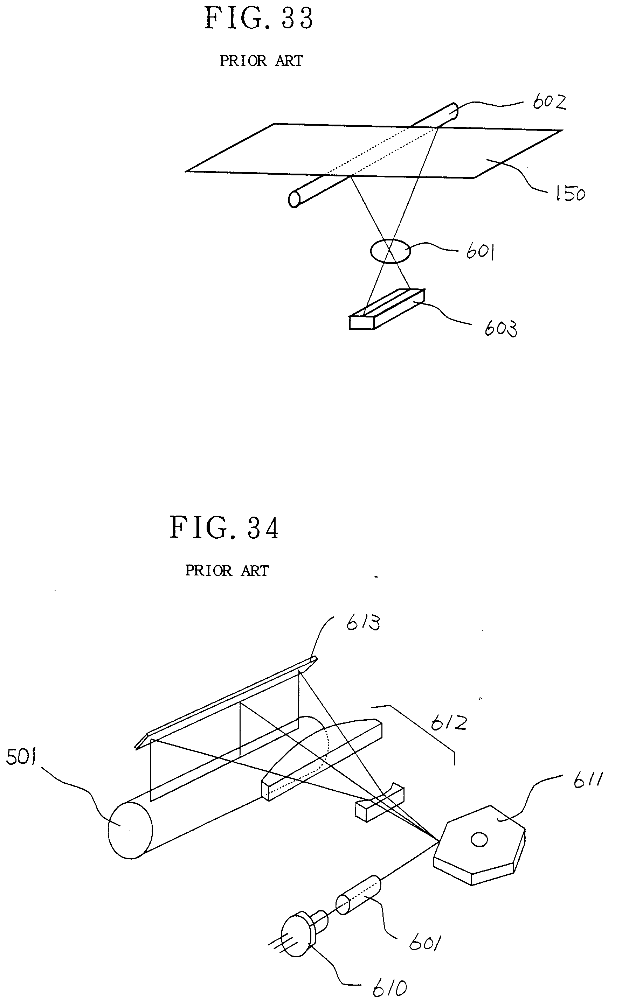

As a conventional example of the image input system, the compact image sensor scanning method will be described by referring to Fig. 33. For illuminating an original, there is used a linear light source such as a fluorescent lamp and the original is exposed to illumination while it is scanned and an original image formed of light transmitted or reflected from the original is image-formed in an image sensor by means of an optical system such as a lens. Then the optical information of the continuous original image formed in the image sensor is sampled with the resolution of the image sensor and photoelectrically converted.

In the case of the digital type image input system, it is possible to correct the dispersion of the brightness of the optical system which is so called as "shading" or the dispersion of sensitivity of the image sensor or to perform image processings such as the desired color correction, power variation, image field separation and etc. according to necessity by converting the image signal into a digital signal.

The digital type image writing system converts the image signal read out by the above-mentioned image input system into optical information again by the following optical system and exposes the information to the surface of the sensitive body. An image writing system using a beam switchable semiconductor laser will be described by referring to Fig. 34. As shown, a laser beam emitted from the laser is converted to parallel beams through an optical system to become incident upon a polygon mirror. Then the laser beam is caused to vary its angle due to the rotation of the polygon mirror and flexes in the direction of the axis of a photosensitive body. Next, the laser beam deflected by the polygon mirror is throttled on the photosensitive body to a beam diameter corresponding to the required print density through a $f - \theta$ lens optical system. Thus, due to the above-mentioned series of laser beam scanning and the rotation of the photosensitive body, a two-dimensional electrostatic latent image is formed on the photosensitive body.

Further, as an image writing system other than the above-mentioned writing systems there can be cited a system using a LED or a liquid crystal shutter and a light source (hereinafter referred to as "LCS"). The system using a LED is constructed such that a plurality of LED chips corresponding to the number of recording pixels are arranged along a straight line and the image is exposed to these LED chips through an equimultiplied image forming optical system, celfoc lens eye, plastic lens eye, roof mirror lens eye (RMLA) and etc. The image writing system using LCS switches light from a fluorescent lamp or a backlight by a liquid crystal shutter every pixel and forms an image on the surface of a photosensitive body through an equimagnification image-forming optical system.

The above description is in respect of the image input system and the image writing system for a copying machine but in the case of an image output device for a printer or the like, image data of an original image is transmitted directly from outside the apparatus as an electrical signal so that the original image is formed on the surface of the photosensitive body by the image writing system after the above-described digital signal processing has been performed as required.

Next, the basic structure and the process of the conventional image recording system will be described by referring to the accompanying drawings.

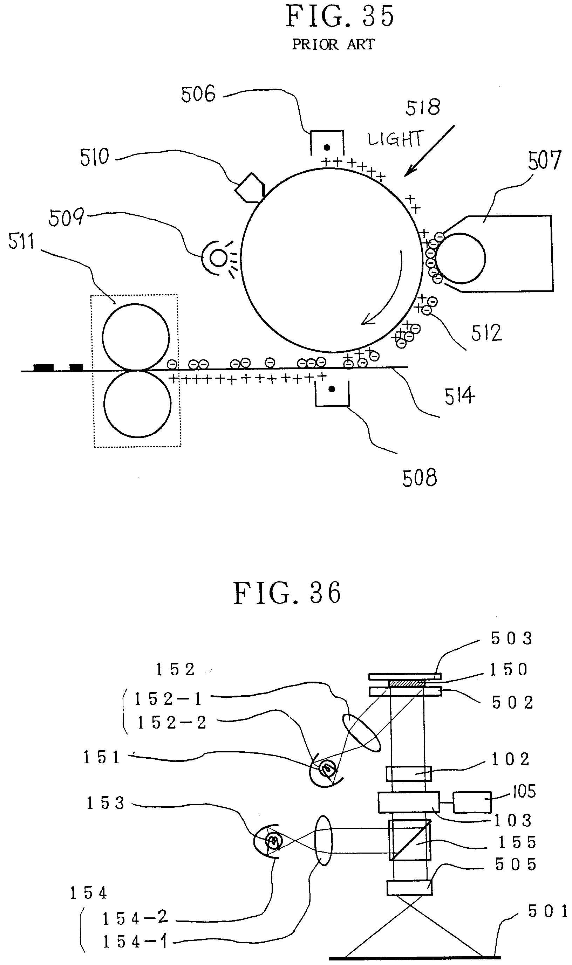

In Fig. 35. the image recording system comprises a drumlike sensitive body as a functional medium responsive to light and its peripheral devices such as a charger, exposing device, developer, transfer device, fixing device, jodenki and cleaner.

First, the surface of the photosensitive body is uniformly charged by the charger in a dark place. Next, when a positive image of an original is illuminated on the surface of the photosensitive body by the image writing system, the charge at the light-applied portion of the surface of the photo- sensitive body is removed due to the photoconductive effect of that surface and an electrostatic latent image represented by the charge remaining only of the image portion is formed. Then, colored particles (hereinafter referred to as the "toner") which is charged to a polarity reverse to that of an electrostatic latent image are adhered to the latent image to form a visible image (hereinafter referred to as the "toner image"). After that, a sheet of recording paper is laid over the toner image, a voltage of a polarity reverse to the charged polarity of the toner is applied to the rear surface of the recording paper by the transfer device and the toner is attracted to the recording paper due to the electrostatic force thereby transfer the toner image to the recording paper. The recording paper having the toner image transferred thereto is carried to the fixing device where it is applied with heat and a pressure so that the toner representing the toner image is deposited on the recording paper. At the same time, the electrical charge representing the electrostatic latent image on the surface of the photosensitive body after the transfer is removed by the application of light and the toner remaining on the photosensitive body without being transferred to the recording paper is removed by the cleaner. Thus, by repeating a series of processes from charging to cleaning, a printing operation is continuously performed.

The above is a prior art example of the image recording system of the above-mentioned image output apparatus using an electronic photographic recording method but as other recording methods used for the image recording system using a functional medium responsive to heat or light, there have already been disclosed a thermal transfer recording method, thermo-autochromic method (hereinafter referred to as the "TA method"), silver-salt recording method and magnetographic recording method.

However, as shown in Fig. 4, the conventional enlargement projector making use of simple transmitted or reflected illumination has had the disadvantage that primarily, since it has no function of adjusting image information, it is necessary to considerably strictly adjust in advance the quality of the image on a medium used as a target object according to the display purpose and where the image quality deteriorates due to the image fetching and copying processes, it is not possible to obtain with ease the quality of an image desired to be displayed.

For example, with the ordinary slide projector, only a positive image recorded in advance on a reversal film can be used as a medium for the input image information and when the negative image which is being more widely used in general is enlargement-projected as it is, a negative with reversed contrast and color is naturally displayed so that it can not be used as a medium for image information, even the overhead projector has the same defect in the point of lacking the image information adjusting function. This defect is not so striking in the display of a black-and white-binary image such as a written document but in the display of an image with a gray scale or color tone such as a photograph, the deterioration of original image information taking place in the course of electronic copying used for the preparation of an OH sheet directly reflects on the quality of the display image. Therefore, we often comes across such an excuse [... although not clear in the case of OHP ]. For example, even when the display target is a solid body such as a small-sized part, there is often a case in which the surface of the body is black in color resulting in a failure of obtaining a sufficient reflectivity or inversely, the metallic reflective surface is too bright and dazzling to clearly observe minute detailed information so that it is desirable for the projector to have the function of adjusting the quality of the display image.

As an example of taking a hard copy in place of direct display, we may cite a negative photograph enlarger. In this case, the photographic paper itself as an output medium has a negative and positive reversing function so that the provision of such a function is not always necessary for the enlarger but there are quite many cases where the image photographed on the negative is in a condition not intended for photography depending on the exposure and illumination conditions at the time of photography. For example, insufficient or excessive exposure due to a deviation from the optimum exposure conditions such as backlight and the like and getting out of color balance due to the illumination by a fluorescent lamp, the setting sun or the like are daily occurrences and it goes without saying that most photographs can not deserve appreciation unless they are corrected at the time of negative photographic printing. Accordingly, in the printing process by the enlarger, the function of adjusting the contrast, brightness and color balance of the inputted image is extremely important. In the case of the conventional enlarger, the brightness can be adjusted by the exposure time or intensity but the adjustment of contrast is difficult unless the photographic paper itself is replaced with one having a different photosensitivity and as regards the adjustment of color balance, since the adjustment is made by the insertion of a color filter, the freedom of adjustment is limited so that the operativeness of the machine can not be said to be favorable.

Second, the conventional enlarger has also had the defect that since the light used to illuminate the target object is used for display as it is, the intensity of illumination sufficient for displaying a high-quality image can not be obtained. For example, in the case of a slide projector, the slide film becomes deteriorated and deformed due to heat so that the intensity of light for illuminating the slide film is limited. Further, also in the case of the stereoscopic projector, where the reflectivity of the target object is low or the reflecting surface of the object is a tilted mirror surface, most of the illuminating light is absorbed or reflected in the direction other than the direction of the read window of the display device so that the intensity of light inputted to the display device sharply drops as compared to the intensity of light actually illuminated. In such a case as this, since the brightness of the image to be displayed becomes low, if a powerful illuminating light source is used, a display of high brightness which could originally be obtainable can not be realized. The device for displaying the target image by light amplification through the spatial optical modulator is provided with a powerful display light source and a light amplification function through the spatial optical modulator so that it can obtain a high-brightness display image by overcoming the above-mentioned second defect but it still fails to escape the first defect of being devoid of the function of correcting the deterioration of the read image as already cited to obtain a high-quality display.

In the case of the apparatus using a scanning type image device such as a pickup tube or CCD in fetching image information as shown in Fig. 5, as it is often provided with the function of adjusting or automatically correcting the quality of the image such as the so called contrast, color balance and brightness after converting the screen image information into video information, the above-mentioned first defect can be eliminated to a considerable degree. Further, it is possible to realize an image display of a considerably high degree of brightness depending on the quality of the CRT or liquid crystal panel for outputting and also to enlargement-project by using a powerful light source in combination with the light amplification function of the spatial optical modulator so that it is considered that the second defect has been sharply improved. However, when these scanning type image devices such as the pickup tube and CCD are used, the image information having a frequency component higher than the spatial frequency determined by the interscanning-line space according to the Nyquist's sampling theorem will be missing in the direction intersecting at right angles with the scanning lines at the point of time of fetching the image information. Even in the direction parallel to the scanning lines, in the case of the CCD, the frequency component higher than the spatial frequency will be likewise missing by the limitation resulting from the picture element of the image pickup element and even if a pickup tube is used, there results a serious defect that the spatial frequency component higher than a predetermined value is still missing due to the bandwidth limitation of the video signal processing circuit that follows.

In summation, the conventional apparatus for fetching and outputting image information in the form of light has had the problems that firstly it lacks the function of compensating for the deterioration of the image information or adjusting it according to the purpose of outputting it so that no optimum output as originally intended can be obtained and secondly, the target object can not be illuminated by a sufficiently powerful light source or even if it could be done, the light source can not be made the best use of for outputting the image information. Further, the apparatus which outputs an input image after once converting the image into a video signal by using a pickup element has had the problem that although it can overcome the above-mentioned two defects, there results a serious defect that a high spatial frequency component will be missing at the point of time when the optical signal is converted into an electrical signal.

Further, the image output apparatus for the conventional printer or copying machine has had the following problems. (1) The image output apparatus using an analog type image input system and an image writing system has the characteristics that since the reading of the original by the image input system and the exposure of the original image to the surface of the photosensitive body by image writing system can be performed instantaneously, the original can be speedily read out and further, since optical information of the original image per se is applied to the surface of the photosensitive body as a functional medium, the lacking of image information seldom takes place. However, it is difficult for this image output apparatus to perform image processings such as the correction of contrast with respect to the spatial frequency of the optical system of the image input system or the image writing system or color correction. Further, in the image input system, light from the light source is applied to the original and the original image is formed by the light reflecting from the original but in this case, if, for example, the original has a low level of surface smoothness such as plain paper or regenerated paper, the reflectivity of the surface of the original is so low that there is sometimes a case in which light of an intensity sufficient to write an image on the photosensitive body can not be emitted. Therefore, due to a shortage of the quantity of light, the image formed by the final print output deteriorates so that the dispersion of the output takes place depending on the kind of the original.

Further, where both of the analog type image input system and the image writing system are used, there is used without exception a normal developing method for exposing the positive image of the original to the surface of the photosensitive body. In this case, the enhancement of accuracy and the stability of the intensity of light of the image writing system are required to prevent the fogging of the blank portion of the image of reproducibility of thin lines thereof. (2) In the case of the image output apparatus using both of the digital type image input system and the image writing system, the original image comprising the reflecting light generating at the time of exposure of the original to the light source is read out by every row of linearly arranged image sensors and the original or the image sensors are mechanically scanned in the direction perpendicular to the direction of arrangement of the sensors thereby reading out the original in a two-dimensional fashion. Accordingly, the scanning speed depends on the sensitivity of each image sensor.

Further, it is possible to correct the dispersion of brightness of the optical system called "shading" and the dispersion of sensitivity of the image sensors and to perform the desired image processings such as color correction, power variation and image field separation by converting optical information into an electrical signal and comparing the converted image signal with a reference voltage but since the image sensors used are of scanning type such as CCD, the above-described lacking of information takes place. Further, with the digital type image input system, the data is retained by the pixel structure, the resolution with respect to the output depends on the resolution of the image sensors scanning the original.

Further, in the case of the image output apparatus such as a printer or a copying machine, an object of the invention is to increase the printing speed and the quality of the printing output.

Therefore, in order to solve the conventional problems, it is an object of the present invention to provide an image output apparatus which is provided therein with a mechanism of adjusting the quality of a target image according to an intended purpose and a light amplification function for obtaining an output image of a high degree of brightness and which is capable of avoiding the missing of a high frequency component taking place when an optical image signal is converted into an electrical signal and capable of outputting an optical input signal as an optical output signal.

In order to solve the above-described problems, the present invention provides an image output apparatus characterised by comprising: a spatial optical modulator; an input optical system for writing an input target image on a write surface of the spatial optical modulator; an output optical system for forming the image on a read surface of the spatial optical modulator on a final output surface of the apparatus; and a drive circuit, the drive circuit being provided at a portion thereof with a control circuit for controlling the modulation characteristic of the spatial optical modulator in accordance with the output condition of the image.

Further, the present invention has made it possible to increase the printing speed and to improve the quality of the printing output in such a manner that the apparatus is constituted by a functional medium for forming a latent image of the image outputted from the output optical system, recording means visualising on a recording medium the latent image formed on the functional medium and control means for controlling the modulation characteristic of the above-mentioned spatial optical modulator.

Fig. 1 shows an illustrative view of the overall structure of the present invention.

Fig. 2 shows an illustrative view of the overall structure of the present invention by space sharing.

Fig. 3 shows an illustrative view of the over all structure of the present invention by time sharing.

Fig. 4 shows an illustrative view of a prior art example.

Fig. 5 shows an illustrative view of another prior art example.

Fig. 6 shows an illustrative view of a working mode of the present invention with respect to a light transmissive image medium.

Fig. 7 shows an illustrative view of a working mode of the present invention with respect to a light reflective image medium.

Fig. 8 shows an illustrative view of one example of a spatial optical modulator used in the embodiments of the present invention.

Fig. 9 shows an illustrative view of another example of a spatial optical modulator used in the embodiments of the present invention.

Figs. 10 show illustrative views of drive waveforms with respect to a spatial optical modulator used in the embodiments of the present invention.

Fig. 11 shows an illustrative view of another example of a spatial optical modulator used in the embodiments of the present invention.

Fig. 12 shows an illustrative view of the basic structure of an input optical system used in the embodiments of the present invention.

Figs. 13 show illustrative views of two alternatives of one embodiment of a parallel optical system included in the input optical system used in the present invention.

Fig. 14 shows an illustrative view of one embodiment of a color image input optical system by space sharing used in the present invention.

Fig. 15 shows an illustrative view of another embodiment of a color image input optical system by space sharing used in the present invention.

Fig. 16 shows an illustrative view of one embodiment of a color image input optical system by time sharing used in the present invention.

Fig. 17 shows an illustrative view of another embodiment of a color image input optical system by time sharing used in the present invention.

Fig. 18 shows an illustrative view of a still another embodiment of a color image input optical system by time sharing used in the present invention.

Fig. 19 shows an illustrative view of a further embodiment of a color image input optical system by time sharing used in the present invention.

Fig. 20 shows an illustrative view of the basic structure of an output optical system used in the embodiments of the present invention.

Figs. 21 show illustrative views of two cases of another embodiment of a part of the output optical sustem used in the embodiments of the present invention.

Fig. 22 shows an illustrative view of one embodiment of a color image output optical system by space sharing used in the present invention.

Fig. 23 shows an illustrative view of another embodiment of a color image output optical system by space sharing used in the present invention.

Fig. 24 shows an illustrative view of still another embodiment of a color image output optical system by space sharing used in the present invention.

Fig. 25 shows an illustrative view of a further embodiment of a color image output optical system by space sharing used in the present invention.

Fig. 26 shows an illustrative view of a still further embodiment of a color image output optical system by space sharing used in the present invention.

Fig. 27 shows an illustrative view of one embodiment of a color image output optical system by time sharing used in the present invention.

Fig. 28 shows an illustrative view of another embodiment of a color image output optical system by time sharing used in the present invention.

Fig. 29 shows an illustrative view of a still another embodiment of a color image output optical system by time sharing used in the present invention.

Fig. 30 shows an illustrative view of one embodiment of an apparatus comprising time-sharing color image input and output optical systems according to the present invention.

Fig. 31 shows a timing chart illustrating how to drive the embodiment shown in Fig. 30.

Figs. 32 show two illustrative examples of a prior art analog type image input system and a prior art analog image writing system.

Fig. 33 shows a view illustrating an example of a prior art digital type image input system;

Fig. 34 shows a view illustrating an example of a developing system in an image recording system using a prior art electronic photographic recording system.

Fig. 35 shows view illustrating an example of an image recording system using a prior art electronic photographic recording system.

Fig. 36 shows a view illustrating the structure of an image input system and an image writing system for an electronic photographic recording system as one embodiment of the present invention.

Fig. 37 shows a view illustrating the structure of an image recording system for the electronic photographic recording system as one embodiment of the present invention.

With the image output apparatus of the above-described structure, it is possible to optically amplify the inputted image by the spatial optical modulator and to adjust, according to the intended purpose, image information making the best of not only the optical amplification but also the modulating function of the spatial optical modulator by controlling the modulation characteristic of the modulator through the control circuit forming part of the drive circuit. Particularly, in the case of the optical write type spatial optical modulator, the inputted image information is spatially and continuously processed (i.e., amplified and modulated) without scanning so that the missing of a high spatial frequency component is controlled to a minimum.

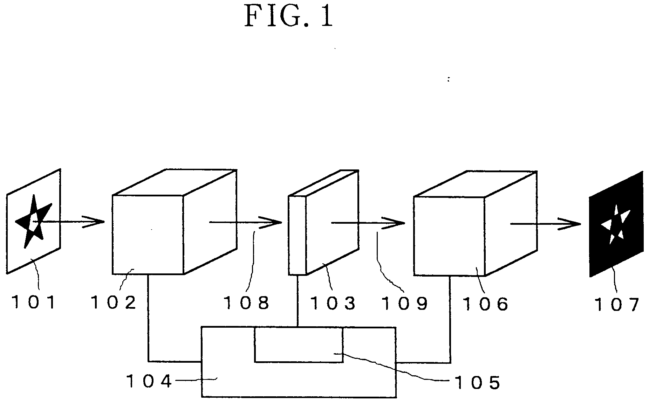

First, the overall structure of the present invention will be described by referring to Fig. 1. An input target image 101 is formed on the write surface of an optical write type liquid crystal spatial optical modulator 103 by an input optical system 102. A light beam 108 which forms an image on the write surface of the optical write type liquid crystal spatial optical modulator 103 is hereinafter called write beam. The input image formed by the write beam is modulated according to the modulation characteristic of the spatial optical modulator controlled by an optical modulation characteristic control circuit 105 included in a drive circuit 104 (an example of negative-positive inversion is shown in Figs. 1, 2 and 3) and appears on the read surface of the optical write type liquid crystal spatial optical modulator. This modulated image is read out by a light beam 109 (hereinafter referred to as read beam) for making an output image and is formed as an output image 107 on the final output surface of the apparatus as a whole by means of an output optical system 106.

The spatial optical modulator 103 used in the present invention has a function as a certain kind of photoelectric photographic film capable of modulating with real time spatial and time information such as changing the contrast and brightness after writing an input image and outputting a modulated result and it is also capable of using a negative of a target image as an input image since it has the function of performing negative-positive inversion. Particularly, the optical write type spatial optical modulator capable of performing spatial modulation after optically writing an input image is capable of spatial modulation of a spatial analog image such as a photographic film so that it has the function of performing a smooth image modulation corresponding to the resolution of the optical write type spatial optical modulator as compared to an electrical write type spatial optical modulator such as a liquid crystal television for displaying or modulating spatially scattered picture element information. Further, in the case of an apparatus in which an output target image is separated into three colors before it is inputted to a spatial optical modulator and the modulation characteristic of the spatial optical modulator is controlled by three control circuit systems provided to correspond to the separated three colors, respectively, it is possible to correct the color tone called "color balance" besides contrast and brightness. As three color separating methods, there are basically considered two methods of space sharing and time sharing.

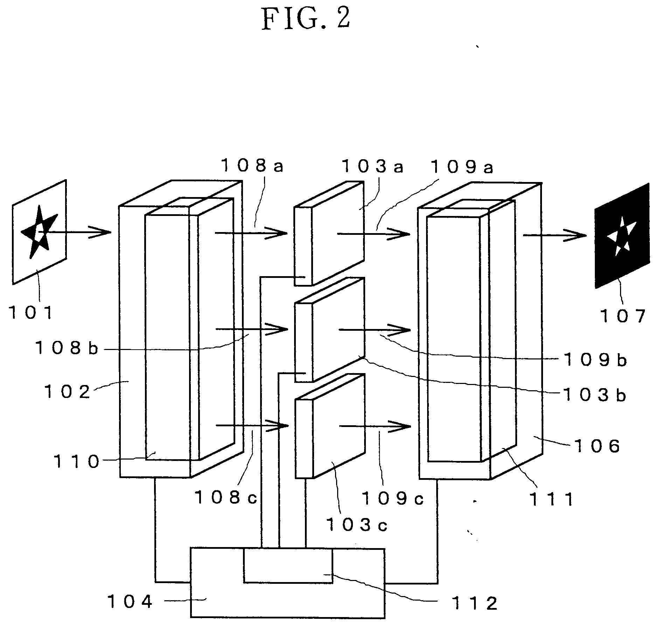

As shown in Fig. 2, in the space sharing method, input light carrying input image information is colour-separated into three different colour write beams 108a, 108b and 108c by a space sharing colour separating optical system 110 included in the input optical system 102. The three different colour write beams are propagated through different spatial paths, respectively, and are separately image-formed in separately provided three spatial optical modulators 103a, 103b and 103c. These three kinds of color separating input images are modulated according to the modulation characteristics of the three spatial optical modulators independently controlled by an optical modulation characteristic control circuit 112 included in the drive circuit 104 and appear on the read surfaces of the spatial optical modulators, respectively. The modulated colour-separated images are read by three different color read beams 109a, 109b and 109c corresponding to the write beams, synthesized by a color synthesization optical system 111 included in the output optical system and the synthesized image is formed as an output image 107 on the final output surface of the apparatus as a whole. In this case, it is possible to freely adjust the colour balance of the final output image 107 by independently controlling the optical modulation characteristics of the three colours. Further, depending on the purpose of image outputting, there can be a case in which colour separated images are separately processed or outputted separately without synthesisation, so that the existence of the colour synthesisation optical system 111 does not always make itself a requirement. For example, where a color image is outputted as a so called hard copy, the process of printing or transferring three separated color images on or to a sheet of paper serving as an output medium is not always required to be performed on the three colors simultaneously at the same place but the three colors are processed in sequence at different places color by color only if a color image formed of overlapped three color images is finally formed. Accordingly, in such a case as this, the color synthesization is performed not by the optical system but by the movement of paper as an output medium and the color synthesization optical system 111 does not always make itself a required condition.

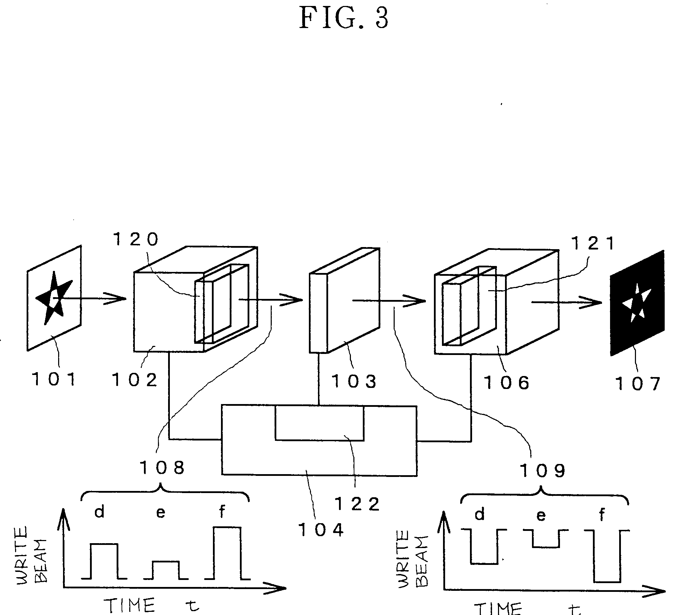

As shown in Fig. 3, in the time sharing method, input light carrying input image information is separated into three different color write beams 108d, 108e and 108f for three time zones divided by a time sharing color separating optical system 120 included in the input optical system and the separated color beams are image-formed on the single spatial modulator 103. These three color-separated input images are modulated according to the modulation characteristic of the spatial optical modulator independently controlled for the time zones by an optical modulation characteristic synchronous control circuit 122 included in the drive circuit 104 and appear on the read surface of the spatial optical modulator in an alternative fashion according to the time zones. These modulated color-separated images are read out by three different color read beams 109d, 109e and 109f according to the time zones, synthesized by a time sharing color synthesization optical system 121 included in the output optical system and the synthesized color image is formed as an output image 107 on the final output surface of the apparatus as a whole.

The output image is an image alternatingly color-modulated according to the three time zones but if the repetitive frequency of these three time zones is sufficiently high, the output image has the same effect as when the three color images are overlapped from the sensational point of view because of the color time responsiveness of the naked eye when it is observed visually. That is, the actual color synthesization is performed by the sense of a person viewing the output image and the image visually observed is the color image after synthesization. Where the image output is not displayed for direct viewing but is used as a hard copy output or for other image processings, it is not always necessary to increase the repetitive frequency of the three time zones.

Further, as already stated in the description of the above-mentioned space sharing, there may be a case in which separate image processings or outputtings are performed for colors as separated without synthesization depending on the purpose of outputting so that the existence of the time-sharing color synthesization optical system 121 does not always make itself a requirement. However, even in that case, there is a common advantage that by dividing the time zone into three parts, three color images can be processed by the single spatial optical modulator 103. Anyway, as in the case of the space sharing method, it is possible to freely adjust the color balance of the final output image by independently controlling the optical modulation characteristics of the three colors.

Further, with the image output apparatus such as a printer or a copying machine having the above-described structure has the advantages that: (1) The intensity of light can be adjusted in a wide range in correspondence to the kind of the original or the optical or thermal sensitivity of the functional medium by the light amplifying operation of the spatial optical modulator of the image writing system.

(2) The image input system makes it possible to read the original image in a two-dimensional fashion without scanning the input image medium and the image writing system also makes it possible to write the original image in a two-dimensional fashion with respect to the functional medium.

(3) The image information read out by the image input system and the image writing system from optical information is outputted as the optical information per se without converting into an electrical signal, so that the lacking of a high spatial frequency component can be controlled to a minimum and further, since the original image on the readout surface of the spatial optical modulator is not dot-separated, an image of high resolution is outputted at the time of reading the original image.

(4) Further, by controlling the optical modulation characteristic of the spatial optical modulator, it is possible to perform image processings such as the adjustment of the brightness of the readout image, contrast, resolution and color balance and the inversion of negative/positive image.

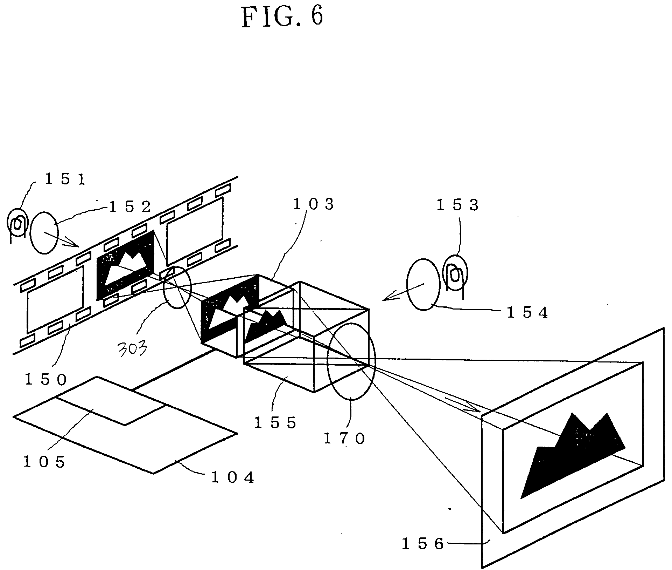

Preferred embodiments of the present invention will be described by referring to the accompanying drawings. The overall structure of the present invention has already been described with reference to Figs. 1, 2 and 3 but the working mode of the invention differs depending on the kinds of mediums carrying input image information and the output formats according to the intended purposes. A first working mode of the invention is shown in Fig. 6 wherein the input target image information is a negative recorded on a negative film and the output format is such that a photographed image is directly projected on a screen for appreciation. Accordingly, a negative film 150 is subjected to transmitted illumination by light from a write light source 151 such as a halogen lamp or the like converged by a collimating lens 152 and the negative image thereof is formed on the write surface of the optical write type liquid crystal spatial optical modulator 103 by an input image forming system 303.

This input image information is modulated according to the modulation characteristic of the spatial optical modulator controlled by the optical modulation characteristic control circuit 105 included in the drive circuit 104 so that it becomes a positive as shown in the figure and appears on the read surface of the optical write type liquid crystal spatial optical modulator 103. This modulated image information is subjected to reflected illumination by the light from a read light source 153 passed through a collimating lens 154 and a beam splitter 155 and is image-formed on a projection screen 156 as an output image by an output image-forming system 170.

By the way, in the instant embodiment, if the output mode is altered such that the projection screen is replaced with a sheet of photosensitive photographic paper and the output optical system is made to have a zooming function capable of varying the enlargement ratio of projection, the system itself can serve as an enlarger which prints a negative on a negative film over the sheet of the photographic paper by enlargement projection.

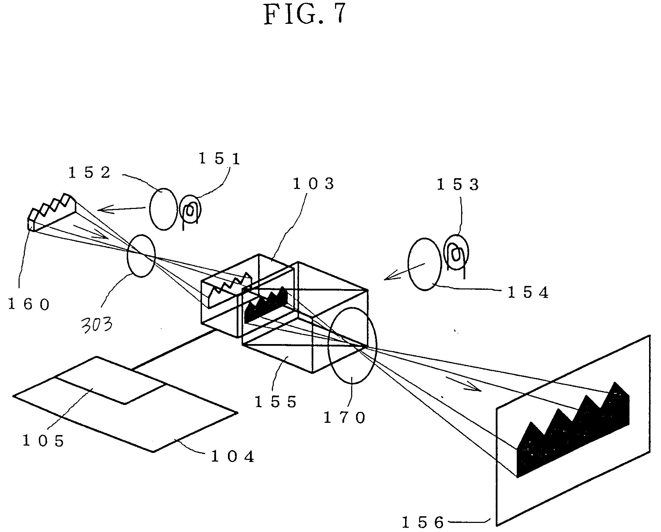

A second working mode of the invention is shown in Fig. 7.

In the instant embodiment, the input target image information is the image itself that is constituted by the surface of a body such as a small-sized part, document, photographic print or the like and a small-sized part 160 as an input target image information medium in the instant embodiment is illuminated by the reflection of light from the write light source 151 converged by the collimating lens 152 and the image thereof is formed on the write surface of the optical write type liquid crystal spatial optical modulator 103 by means of the input image forming system 303. This input image information is then modulated according to the modulation characteristic of the spatial optical modulator controlled by the optical modulation characteristic control circuit 105 included in the drive circuit 104 and appears on the read surface of the optical write type liquid crystal spatial optical modulator. The image information thus modulated is illuminated by the reflection of light from the read light source 153 passed through the collimating lens 154 and the beam splitter 155 and is formed as an output image on the projection screen 156 by means of the output image-forming system 170.

As will be seen from the description of the above two working modes, the problem of whether the input target image information medium is transmissive or reflective corresponds to the problem of whether the mode of illumination used for image inputting is transmitted illumination or reflected illumination so that there is no essential difference in the present invention between the two modes of illumination. Accordingly, in the description of the following embodiments, only examples of reading by the transmitted illumination mode for all transmissive mediums are cited for the sake of avoiding the complexity of description but it goes without saying that if the mode of illumination is altered, all the examples are applicable to image information carried by reflective mediums. Further, as regards the spatial optical modulator, there are also described only cases where the structure of the read section of the modulator is of reflex type but even when a transmissive type spatial optical modulator is used, if the mode of illumination of the read light for reading the output image of the spatial optical modulator is changed from reflected illumination to transmitted illumination, the same result can be realized. It is therefore natural that the working modes of the present invention are not limited to the reflex reading type spatial optical modulator but the transmission read type spatial optical modulator is also applicable.

Concrete embodiments of the present invention will be described hereinbelow but for working the present invention, a great number of working modes are considered with respect to each of the spatial optical modulator, output and input optical systems so that if all of embodiments resulting from combinations thereof are to be described, a great many pages are required. Therefore, in the following embodiments, the above three constituent elements will be described by citing an example for each of them. In constructing the image information output apparatus by combining the constituent elements, it is possible to analogize the entire structure of the apparatus of itself by referring to Figs. 1, 2 and 3 and Figs. 6 and 7. In this case, as regards the output and input optical systems accompanied with three color separation, embodiments of both the space sharing method and the time sharing method are given so that it is necessary to combine the output and input optical systems according to these sharing methods.

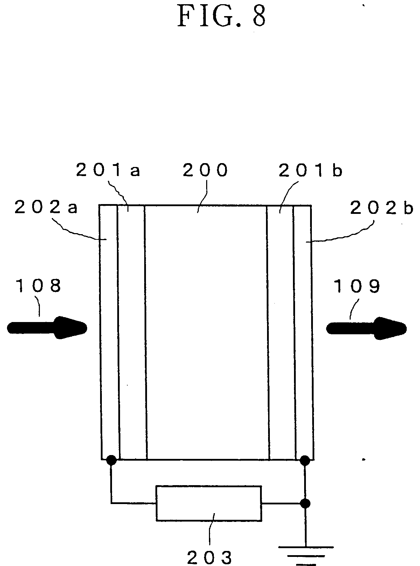

To begin with, an embodiment of the spatial optical modulator will be described by referring to the related drawings. There are considered many kinds of spatial optical modulators which can be used in the present invention. For example, as an optical write type spatial optical modulator using an electrooptical crystal, there is well known a structure that as shown in Fig. 8, insulating films 201a and 201b made of $Bi_2O_3$ or parillin are formed on the surface of a $Bi_{12}SiO_{20}$ crystal (hereinafter called "BSO crystal") and then transparent electrodes 202a and 202b are formed. Across the transparent electrodes 202a and 202b a DC voltage of approximately 1.5-2kV is applied. When an image obtained by reading a written image with a write beam 108 of a green-blue color band wavelength from one side of the optical write type spatial optical modulator is illuminated while the DC voltage is applied on the modulator, the resistivity of the BSO crystal at the illuminated region of the image drops to allow a photo current to flow through the region. After that, when the applied voltage is made zero or a reverse polarity DC voltage is applied across the electrodes, electrical charges are accumulated on the interfaces between the BSO crystal 200 at the region through which the photo current flows and the insulating films 201a and 201b and due to the electrooptical effect taking place by the resultant internal electrical field, the rotation of the plane of polrization differs between when the light is transmitted through the no electrical charge accumulated region and when the light is transmitted through the charge-accumulated region. Accordingly, after an image is written in the above manner, when a read beam is applied on the above-mentioned spatial optical modulator after sandwiching the modulator between two polarizing plates, a read beam 109 is outputted with the written image represented in the form of a positive (or negative) image.

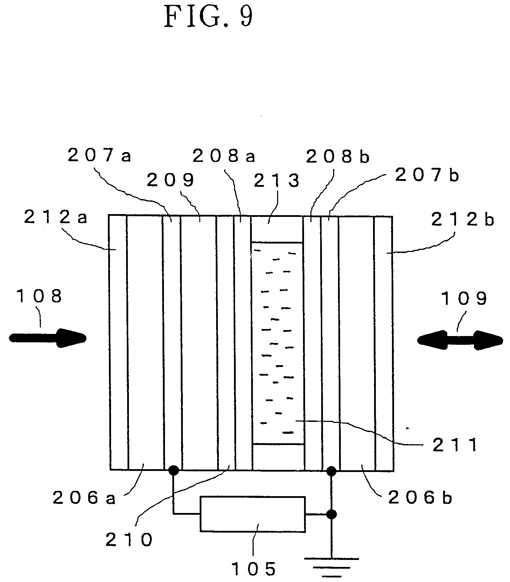

As another example of spatial optical modulator which can be used in the present invention, the structure of a optical write type liquid crystal spatial optical modulator will be described. As shown in Fig. 9, transparent substrates 206a and 206b made of glass or plastic material and which are used for clamping liquid crystal molecules are provided on the surfaces thereof with transparent electrode layers 207a and 207b and orientation film layers 208a and 208b, respectively. Each of the orientation film layers 208a and 208b is formed such that a vertically oriented polyamide film is coated on the surface of each of the transparent electrodes and then the surface of the polyamide film is rubbed with a cloth such as neatly napped velvet. The transparent substrates 206a and 206b have their orientation film layer sides arranged face to face through a spacer 213 to thereby sandwich a nematic liquid crystal layer 211 whose dielectric anisotropy is negative. Further, on the optical write side transparent electrode 207a, a photoconductive layer 209 is laminated with respect to the orientation film layer 208a and on the outer surfaces of the write side transparent substrate 206a and the read side transparent substrate 206b there are formed nonreflective coatings 212a and 212b, respectively. For the photoconductive layer 209, a chalcogenide photoconductive body consisting of i-type, pi-type or pin-type hydrogenated amorphous silicone, ZnSe, CdSe or CdTeSe or an organic photoconductive body consisting of vanadyl phthalocyanine can be used.

Further, between the photoconductive layer 209 and the orientation film layer 208a a dielectric mirror 210 is formed. The dielectric mirror 210 is of the structure such that highly light-shielding light reflective layers and highly reflective layers are laid one above another in sequence from on the side of the photoconductive body 209. The highly lightshielding light reflective layer consists of high refractive index $\lambda/4$ films each consisting of silicone or a siliconegermanium compound and low refractive index oxides $\lambda/4$ films which are alternately laid one above another and the highly reflective layer consists of high refractive index oxide $\lambda/4$ films of titanium oxide or zirconium oxide and low refractive index oxide $\lambda/4$ films of

silicon dioxide or magnesium fluoride which are laid one above another. By the way, in the following description, the interface between the transparent electrode 207a and the photoconductive layer 209 is called a write surface and the surface formed by the nematic liquid crystal layer 211 is called a read surface.

Further, it goes without saying that for the above-mentioned transparent substrate 206a, a transparent substrate such as an optical fiber plate having a light transmission anisotropy may be used.

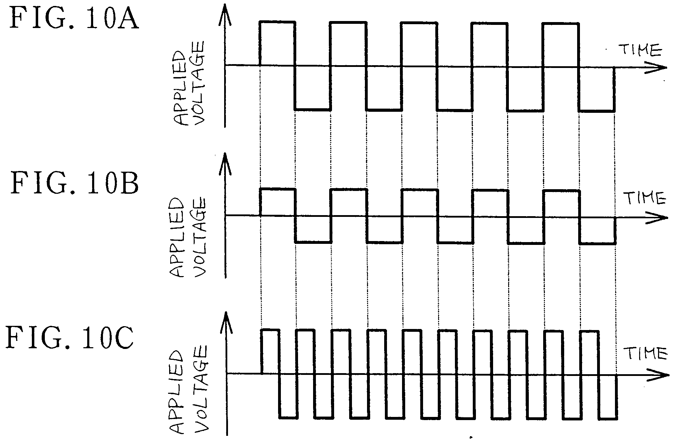

In the optical write type spatial optical modulator having the above-described structure, the nematic liquid crystal layer 211 has its liquid crystal molecules initially oriented at a tilt angle of about 3 - 5 degrees with respect to perpendiculars to the orientation film layers 208a and 208b. That is, where no electrical field is applied on the nematic liquid crystal layer 211, the nematic liquid crystal layer 211 has its liquid crystal molecules oriented at a tilt angle of 3 - 5 degrees with respect to a perpendicular to the surfaces of the orientation film layers 208a and 208b. Upon this optical write type spatial optical modulator there is applied a bipolar pulsating voltage shown in Fig. 10(a) which is generated in the optical modulation characteristic control circuit 105. In this case, when the write beam 108 is emitted from on the side of the transparent substrate 206a of Fig. 9, the impedance of the write beam emitted portion of the photoconductive body 209 drops lower by about 1000 times or more than otherwise so that most of the effective value of the bipolar pulsating voltage is applied on the nematic liquid crystal layer 211. In this case, the tilt angle of the liquid crystal molecules applied with the effective value of the bipolar pulsating voltage changes with respect to the perpendiculars to the orientation film layers 208a and 208b in correspondence to the effective value so that a double refractive change takes place at the portion of the nematic liquid crystal composition 211 to which the above-mentioned write beam 108 is applied. Accordingly, when the read beam 109 polarized in a particular direction is emitted from the read side of the optical write type liquid crystal spatial optical modulator and reflected light of the read beam 109 from the optical write type liquid crystal spatial optical modulator is detected through a polarizing element having a polarizing direction perpendicular (i.e. parallel) to the polarizing direction of the write beam 109, a readout image with its portion applied with the write beam 108 being positive (negative) is obtained.

In this case, when the amplitude of the drive voltage generated in the optical modulation characteristic control circuit 105 is made low (or high) as shown in Fig. 10(b) or the frequency of the drive voltage waveform is made high (or low) as shown in Fig. 10(c), the brightness, contrast and resolution of the readout image can be changed or the positive/negative relationship of the readout image can be reversed. The drive voltage applied in this case is restricted depending on the kind of the material forming the composite films or the thickness of the films but in many cases, the amplitude of the drive voltage is in the order of 8 - 20V and the frequency is in the range of 0.5 - 10kHz.

Further, it goes without saying that as regards the waveform of the voltage to be applied on the optical write type liquid crystal spatial optical modulator, periodical voltage waveforms such as sine waveform and sawtooth waveform may be applied.

Further, an example of the use of a vertical orientation type liquid crystal element consisting of a nematic liquid crystal composition having a negative dielectric anisotropy has been described hereinabove, it is of course possible to use a horizontal orientation type liquid crystal element consisting of a nematic liquid crystal composition having a positive dielectric anisotropy.

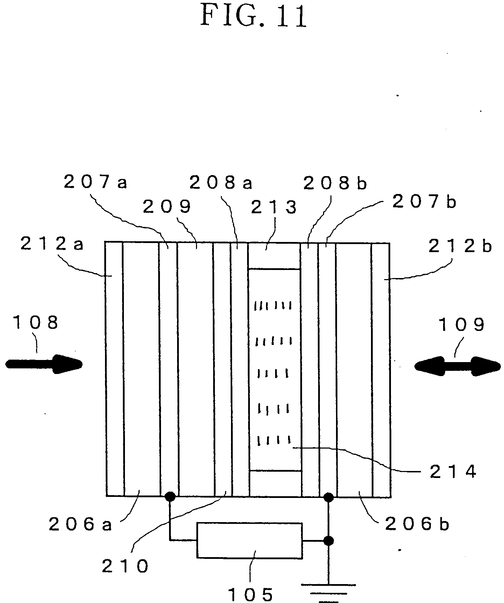

As another example, the structure of an optical write type ferroelectric liquid crystal spatial optical modulator will be described. Fig. 11 is a block diagram of one example of an optical write type ferroelectric liquid crystal spatialoptical modulator used in the present invention. The only difference between the spatial optical modulator of Fig. 11 and that of Fig. 9 is that the former uses a ferroelectric liquid crystal layer 214 in place of the nematic liquid crystal layer 211 of the latter. Accordingly, like reference numerals are used for like constitutional elements with respect to Fig. 9 and description of the elements is omitted. However, it should be noted that for the orientation film layers 208a and 208b, a more favorable modulation characteristic can be obtained by the use of a transparent substrate obliquely deposited with silicon monoxide over a range of between 75àE and 85àE from the direction of the normal line of the substrate. Further, the dielectric mirror 210 may be omitted depending on the driving method therefor where the above-mentioned target object for display is not required to be made binary, modulated and light-amplified.

Next, methods for initializing the optical write type ferroelectric liquid crystal spatial optical modulator having the above-described structure are shown. A first method is that the entire write surface of of the optical write type ferroelectric liquid crystal spatial optical modulator (or the read surface thereof when no dielectric mirror is present) is illuminated, a pulsating voltage or a DC bias voltage or a DC bias voltage overlapped with an AC voltage of 100Hz - 50kHz which is sufficiently higher than the operating threshold voltage at the time of illumination is applied between the transparent electrode layers 208a and 208b during illumination thereby keeping the ferroelectric liquid crystal molecules in a unidirectional stabilized state and this state is stored. A second method is that irrespective of whether or not the write surface is illuminated, a pulsating voltage, a DC bias voltage or a DC bias voltage overlapped with an AC voltage of 100Hz - 50kHz which is sufficiently higher than the operating threshold voltage at the time of absence of illumination is applied between the transparent electrode layers 208a and 208b thereby keeping the ferroelectric liquid crystal molecules in a unidirectional stabilized state and this state is stored.

Further, an operation after the optical write type ferroelectric liquid crystal spatial optical modulator has been initialized will be described. A target image to be displayed is optically written while a pulsating voltage, a DC bias voltage or DC bias voltage overlapped with an AC voltage of 100Hz - 50kHz which is lower than the operating threshold voltage at the time of absence of illumination and which is higher than the operating threshold voltage at the time of illumination with the polarity of the voltage being reversed to that when the modulator was initialised is applied. Where hydrogenated amorphus silicon is used for the photo-conductive layer 209, if the wavelength of the laser beam is less than about 900nm, a carrier is generated in the region of the photo-conductive layer subjected to the emission of the write beam and the carrier drifts in the direction of the electrical field due to the applied voltage. As a result, the driving threshold voltage drops and a bias voltage which is higher than the operating threshold voltage and reversed in polarity to the voltage applied at the time of initialization of the modulator is applied on that region of the photo-conductive layer which results in that the inversion of the molecules of the ferroelectric liquid crystal following the inversion of spontaneous polarization takes place and the liquid crystal transfers to its another stabilized state so that the target image is processed to become binary and stored. The stored image remains as it is even when the drive voltage becomes zero.

The image made binary and stored is subjected to the emission of the linearly polarized read beam having its axis of polarization aligned with the direction of disposition of the liquid crystal molecules made uniform by initialization and then passed through an analyzer so arranged that the axis of polarization thereof becomes normal (or parallel) to the direction of polarization of reflected light by the dielectric mirror 210 whereby the image can be read out in a positive or negative form. Alternatively, in order to obtain a positive/negative inverted image of the image read out according to the above-described process, it is of course possible to do so by reversing all the polarities of the above-mentioned initialization voltage, positive voltage and negative voltage.

Where hydrogenated amorphus silicon is used for the photo-conductive layer 209, light whose wavelength is larger than around about 660nm is transmitted through the photo-conductive layer 209. Accordingly, if, in the above case, light having a wavelength of 660nm or more is used as a read beam for an optical write type ferroelectric liquid crystal spatial optical modulator without the dielectric mirror 210, the modulator can be used as a transmissive type optical write type spatial optical modulator. Particularly, if the stored image is read out while the drive voltage is kept zero, it can be without erasing the stored image.

Alternatively, the optical write type ferroelectric liquid crystal spatial optical modulator used in the present invention allows an image having a continuous graduation to be displayed. That is, such optical write type ferroelectric liquid crystal light valve is operated by continuously applying between the transparent electrode layers 208a and 208b a pulsating voltage causing the voltage characteristic of the photoconductive layer 209 of the optical write type ferroelectric liquid crystal light valve to repeatedly become positive and negative in an alternative fashion. Further, in this case, a DC bias voltage is overlappingly applied between the transparent electrode layers 208a and 208b so that the pulse height of the above-mentioned positive voltage is larger than that of the above-mentioned negative voltage. Moreover, in order for the input image to be read out to become a positive image, the direction of polarization of the read beam is determined and the optical write type ferroelectric liquid crystal light valve erases the input image when the above-mentioned positive voltage is being applied and writes and reads the input image when the above-mentioned negative voltage is being applied.

When such asymmetrical pulsating voltages are being applied, a write voltage (negative voltage) proportional to the intensity of light applied to the photoconductive layer 209 at the time of writing is applied on the ferroelectric liquid crystal layer 214 and so a repulsive force proportional to the write beam acts on the ferroelectric liquid crystal molecules but at the same time, due to the asymmetry of the applied voltage, a relaxation force acts on the ferroelectricliquid crystal molecules to urge the latter to return to the original stabilized state. Consequently, the intensity of the read beam at the time of writing by the optical write type ferroelectric liquid crystal spatial optical modulator using the above drive method becomes large in proportion to the intensity of the write beam and vanishes with time. This vanishing time is determined by the relaxation time of the ferroelectric liquid crystal molecules and therefore, it also differs depending on the ferroelectric liquid crystal material used for the optical write type ferroelectric spatial optical modulator but it is preferable that the frequency of the above-mentioned asymmetrical pulsating voltages be about 100 Hz or more. Thus, by using the above-described drive method, it is possible with the optical write type ferroelectric liquid crystal optical modulator to write with real time the display target image having a continuous graduation.

Further, where a continuous graduation image of a negative image is written in the optical write type ferroelectric liquid crystal spatial optical modulator by the arrangement of the same read optical system, it goes without saying that a DC bias voltage is overlappingly applied between the transparent electrode layers 208a and 208b so that the pulse height of the above-mentioned positive voltage is smaller than that of the above-mentioned negative voltage.

In the instant embodiment, the thickness of the nematic liquid crystal layer 211 in Fig. 9 was in the order of 3 - 8$\mu$ m and an intrinsic hydrogenated amorphus silicon film of a thickness of 3 - 5$\mu$ m was used as the photoconductive layer 209. The initial tilt angle of the orientation film surface of the nematic liquid crystal 211 with respect to the vertical direction was in the order of 0.1 - 10 degrees. It is preferable that this initial tilt angle be in the order of 0.3 -5 degrees because the smaller the tilt angle, the higher the contrast but if it becomes too small, phase separation occurs or the operation speed reduces.

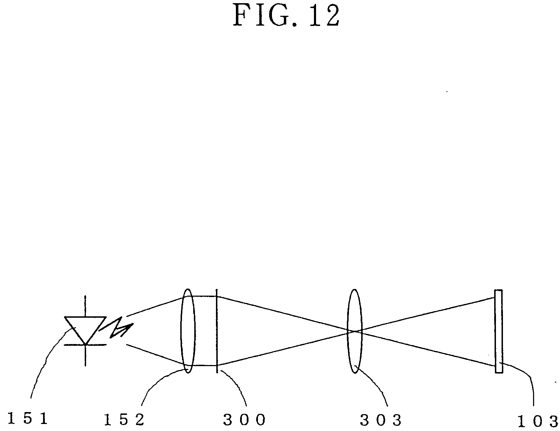

Next, an embodiment of the input optical system of the apparatus of the present invention for forming an output target image on the write surface of the spatial optical modulator will be described by referring to the drawings. Fig. 12 is a block diagram of the basic structure of the input optical system. As already stated, for the sake of simplicity of description, the description will be made by using the transmissive medium as an input image medium 300 and a reflex type spatial optical modulator as the optical write type spatial optical modulator 103.

As the write light source 151, there is shown in Fig. 12 a LED as a light source of narrow bandwidth such as red or green but it may be a metallic halide lamp, a halogen lamp, a white light source capable of generating visible light of wide band-width such as sunlight or a coherent light source such as a semiconductor laser. Further, the write light source is not always required to be incorporated into the apparatus of the present invention as a portion thereof and it may sometimes be environmental illuminations (such as indoor illumination light, sunlight and the like) which can be naturally obtained in the environment in which the input image medium 300 is located. Although all the write source and the optical systems for its illumination are shown in the related drawings and referred to in the embodiments on which the following description will be made, for the purpose of clearly indicate the light beam from the write light source, the incorporation of the write light source into the apparatus is not required in the present invention.

Where a dedicated means of illumination instead of environmental illumination is prepared as a write light source, the light beam from the write source 151 is substantially collimated and made to have a uniform intensity distribution. For a light source such as a halogen lamp which emits light to all the peripheral cubic angles, there are many cases in which an elliptical mirror or a parabolic mirror is usually arranged behind the write light source 151 thereby improving the efficiency of utilization of light.

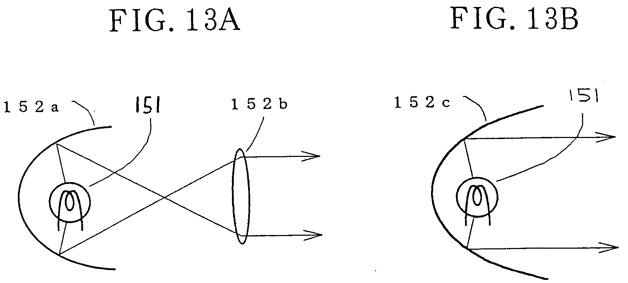

Fig. 13 is a block diagram showing the structure of one embodiment of the parallel optical system 152. Fig. 13(a) shows a case where an elliptical mirror is used and Fig. 13(b) is a case where a parabolic mirror is used. In Fig. 13(a), when the write light source 151 is arranged at a first focal point of an elliptical mirror 152a, the light beam reflected from the elliptical mirror 152a is converged to a second focal point. Then the converged light beam can be substantially collimated. In Fig. 13(b), when the write light source 151 is arranged at the focal point of the parabolic mirror 152c, the light beam reflected from the parabolic mirror 152c is emitted as a collimated light beam and in this case no lens system is often provided. The illuminating light beam thus obtained is applied on the input image medium 300 carrying the target image.

In the instant embodiment, the input image medium 300 is, for example, one like a negative film in which the transmissivity thereof, i.e., $T(x, y; \lambda)$, is distributed in an xy plane in correspondence to the target image. Accordingly, the light beam passed through the input image medium 300 (this light beam is hereinafter referred to as "the input light beam) is subjected to light intensity modulation in corresponding to its transmissivity distribution. Assuming that the intensity distribution of the illuminating light beam be $I(x, y; \lambda)$, the light intensity distribution of the input light beam immediately after the passage of the light beam through the input image medium 300 will be:

$$I(x, y; \lambda) \cdot T(x, y; \lambda).$$

The above input beam becomes incident upon an input image forming system 303 which is so arranged that the input image medium 300 becomes an input image surface and the write surface of the write type spatial optical modulator 103 becomes an output image surface. As a result, the target image on the input image medium 300 forms a conjugate image on the write surface of the optical write type spatial optical modulator 103 as a conjugate surface by the image forming operation of the input image forming system. The light intensity distribution of this conjugate image within the image surface is the product of the light intensity distribution of the input light beam immediately after the passage of the input light beam through the input image medium, i.e. $I(x, y; \lambda) \cdot T(x, y; \lambda)$ and the transfer function of the input image forming system 303, i.e. $F(x, y; \lambda)$. That is, the light intensity distribution of the conjugate image is:

$$N(x, y; \lambda) = I(x, y; \lambda) \cdot T(x, y; \lambda) \cdot F(x, y; \lambda) = I(x, y; \lambda) \cdot T(x/M, y/M; \lambda) \cdot F'(x, y; \lambda)$$

provided that M is a magnifying factor and $F'(x, y; \lambda)$ is a re-defined transfer function. In a favorable image forming system, $F'(x, y; \lambda)$ is very close to 1.

Further, it is general that if possible, illuminating light is selected so as to uniformly illuminate the target object and in that case, since a change in the light intensity in the write surface can be disregarded, the equation of:

$I(x, y; \lambda) = I(\lambda)$ will result. The magnifying factor M may be selected properly according to the sizes of the input image medium 300 and the write surface of the optical write type spatial optical modulator 103 but for the sake of simplicity of description, it is assumed in the following embodiment that the input image forming system 303 be an equimultiplied ideal image forming system.

Accordingly, the equation of $M = F'(x, y; \lambda) = 1$ and hence, the light intensity distribution of the conjugate image to be written on the write surface of the optical write type spatial optical modulator 102 will be expressed by:

$$N(x, y; \lambda) = I(\lambda) \cdot T(x, y; \lambda)$$

which is equal to the brightness of the original target image and color distribution $T(x, y; \lambda)$ multiplied by the spectral intensity of illumination $I(\lambda)$.

In the embodiment shown in Fig. 12, the spectral intensity $I(\lambda)$ is substantially determined by the spectral distribution of the light beam emitted from the light source 151 and the image to be written on the write surface of the optical write type spatial optical modulator 103 is monochromic or narrow bandwidth image or wide bandwidth color image but the generally used optical write type spatial optical modulator 103 itself has no color separating ability so that such color image is sensed as an optical stimulus weighed by the intrinsic spectral sensitivity characteristic $S(\lambda)$ of the optical write type spatial optical modulator 103. That is, the image as a stimulus sensed by the modulator 103 will be expressed by

$U(x, y; \lambda) = I(\lambda) \cdot T(x, y; \lambda) \cdot S(\lambda)$. This image is subjected to a desired processing such as the inversion of negative-positive relationship or alternation of gamma characteristic by intentionally changing the modulation characteristics of the optical write type spatial optical modulator 103. Accordingly, with such a basic structure, the image to be processed by the modulator 103 is a monochromatic image after the original target image $T(x, y; \lambda)$ is weighed and averaged by the spectral characteristic $I(\lambda)$ and the spectral sensitivity characteristic $S(\lambda)$.

Next, an embodiment of a structure capable of processing a color image by adding a color separating function to the above structure using the color separating optical system by space sharing or time sharing will be described by referring to the drawings. For the simplicity of description, a case using three colors of red (R), green (G) and blue (B) for color separation will be described. Of course, it is possible to perform a color separation by using the three colors of cyanogen (C), magenta (M) and yellow (Y) in place of RGB.

In the embodiment of the color image input optical system according to space sharing shown in Fig. 4, there is used as the write light source 151 a white light source such as a metallic halide lamp or halogen lamp. Referring to Fig. 12 which shows the basic structure of the apparatus, the light beam from the write light source 151 is substantially collimated to have a uniform intensity distribution by means of the parallel optical system (a combination of an elliptical mirror and a collimating lens in this case) and illuminate the transmissive input image medium 300 carrying the target image. The input image after the passage of the light beam through the medium 300 is formed on the write surface of the optical write type spatial optical modulator through the input image forming system 303 and in the present case, the input optical system is added with dichroic mirrors 306a and 306b and a reflecting mirror 306c forming a color separating optical system arranged behind the input image forming system 303 in order to enable the color separation by space sharing.

The input light is color-separated into three different write beams 108a, 108b and 108c and separately image-formed in the three optical write type spatial optical modulators 103a, 103b and 103c prepared for RGB. The dichroic mirror 306a transmits R light beam and reflects the other light beam thereby separate only R light beam from the inputted light beam. The R beam thus separated becomes the write beam 108a to form its image on the write surface of the optical write type spatial optical modulator 103a. After the separation of the R light beam, the reflected part of the input light beam is separated into a G light beam and a B light beam. That is, the G light beam is reflected by the dichroic mirror 306b to become the write beam 108b and form its image on the write surface of the optical write type spatial optical modulator 103b. Further, the B light beam passes through the dichroic mirror 306b, is reflected by the reflecting mirror 306c to become the write beam 108c and forms its image on the write surface of the optical write type spatial optical modulator 103c.

With the above structure, the inputted light beam is separated into three colors of R,G and B to form their images on the write surfaces of the optical write type spatial optical modulators 103a through 103c, respectively. In this case, assuming that the transmissivity of the dichroic mirror 306a be $P(\lambda)$ and the transmissivity of the dichroic mirror 306b be $Q(\lambda)$, the images as optical stimuli sensed by the spatial optical modulators will be expressed by the following equations:

$$Ur(x,y;\lambda) = I(\lambda) \cdot T(x,y;\lambda) \cdot S(\lambda) \cdot P(\lambda)$$
$$Ug(x,y;\lambda) = I(\lambda) \cdot T(x,y;\lambda) \cdot S(\lambda) \cdot \{1 - P(\lambda)\} \cdot \{1 - Q(\lambda)\}$$
$$Ub(x, y;\lambda) = I(\lambda) \cdot T(x,y;\lambda) \cdot \{1 - P(\lambda)\} \cdot Q(\lambda)$$

and become those of narrow bandwidth restricted by the band characteristic of $P(\lambda)$, $\{1-P(\lambda)\} \cdot \{1-Q(\lambda)\}$ and $\{1-P(\lambda)\} \cdot Q(\lambda)$ which is determined by a combination of the dichroic mirror 306a and 306b.

Thus, the color-separated three kinds of written images are inputted to the optical write type spatial optical modulators for the three colors so that it is possible to adjust the modulators to have desired modulation characteristics independently of one another. Accordingly, the instant embodiment can be used as the input optical system for the adjustment of color balance by space sharing described in the foregoing with respect to the operation of the present invention. By the way, the manner of combination of the dichroic mirrors forming the color separating optical system is not always limited to that which is shown in the instant embodiment and it is also possible to change the order of arrangement thereof with respect to the light beam.

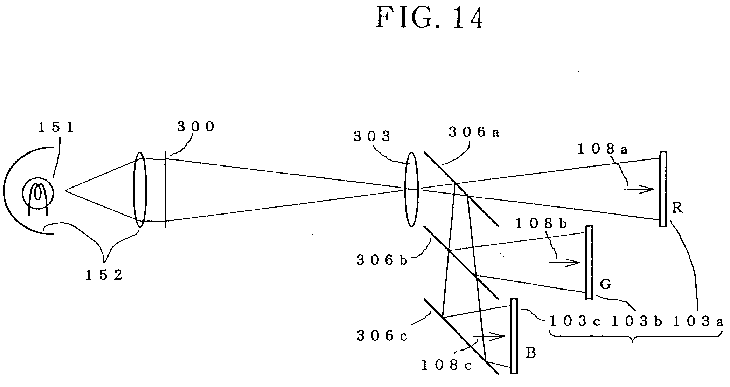

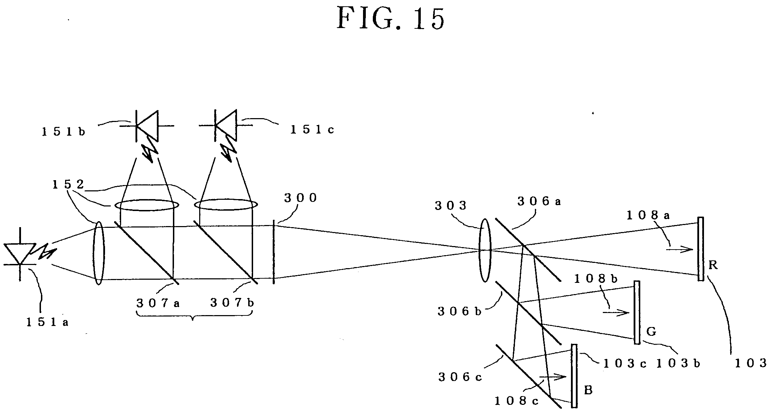

Fig. 15 shows the structure of a color image input optical system by space sharing according to a further embodiment of the present invention. This embodiment is a modification of the embodiment of Fig. 14 such that the white write light source used in the Fig. 14 embodiment is replaced with monochromic or narrow bandwidth light sources 151a, 151b and 151c for R, G and B colors, respectively. Therefore, with the exception that the light beams from these three color light sources are color-synthesized by dichroic mirrors 307a and 307b and then inputted to the input image medium 300, the instant embodiment does not substantially differ from the Fig. 14 embodiment. As a light source for each of the R, G and B, any of a gas laser, a semiconductor laser and a LED may be used.

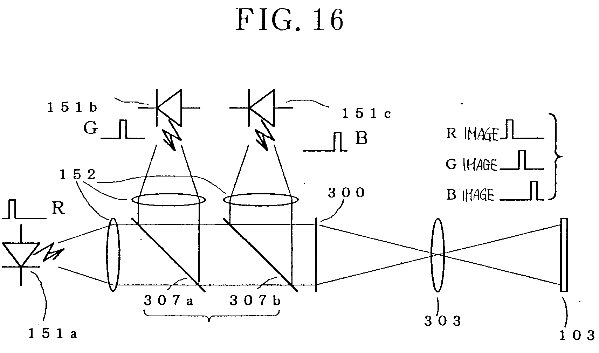

In Fig. 16 there is shown an embodiment of a color image input optical system by time sharing. The structure of the write light source in this embodiment is similar to that shown in Fig. 15 in that the monochromic or narrow bandwidth light sources 151a, 151b and 151c for R, G and B are used. It is also common with the Fig. 15 structure in that the light beams from the three color light sources are inputted to the input image medium 300 after they are color-synthesized by the dichroic mirrors 307a and 307b. However, as this structure performs not space sharing but time sharing, only one optical write type spatial optical modulator 103 is used and as a matter of course, no color separating optical system is necessary. Instead, as already described with respect to the operation of the apparatus of the present invention, the write beams from the above RGB three color light sources are respectively allotted for the three time zones as shown in Fig. 16 and each of the light sources generates its pulsating light beam during the time zone allotted therefor so that the corresponding color separating image is read from the input image medium 300 and then written in the optical write type spatial optical modulator 103.

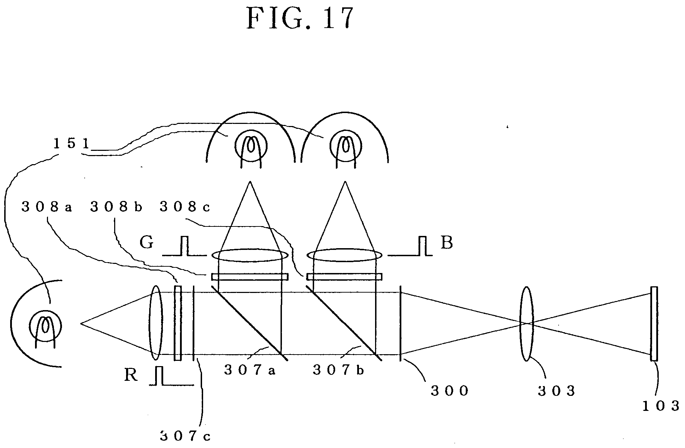

Fig. 17 shows the structure of another embodiment of a color image input optical system by time sharing. In this embodiment, combinations of three white light sources 151 and color filters are used as the RGB three color write light sources. Regarding a R beam, a R beam transmissive filter 307c is actually used but regarding G and B beams, the dichromic mirrors 307a and 307b forming a color synthesization system respectively serve as color filters at the same time. For the generation of pulsating write beams from the color light sources, there are used independent liquid crystal shutters 308a, 308b and 308c, respectively. The structure of the remaining portion is equal to the example shown in Fig. 16.

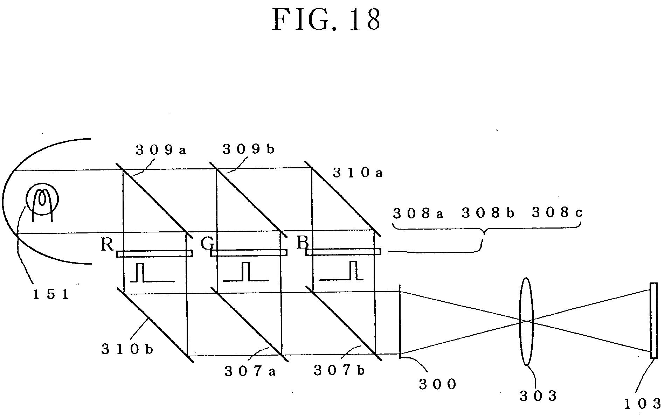

Fig. 18 shows the structure of a further embodiment of a color image input optical system. In this embodiment, unlike the embodiment shown in Fig. 17 in which three white color light sources arranged parallel to one another are used, only a single white light source is used such that the light beam from this light source is separated into three color beams by dichroic mirrors 309a and 309b and then the separated three color beams are synthesized again by the dichroic mirrors 307a and 307b through the independent three color liquid crystal shutters 308a, 308b and 308c. Reflecting mirrors 310a and 310b are used at the turning paints of the optical path. As regards the structure of the remaining part, there is nothing different from the embodiment shown in Fig. 17.

Fig, 19 shows the structure of a still further embodiment of a color image input optical system by time sharing used in the present invention. This embodiment is the same as that shown in Fig. 18 in that the time-shared three color separated light beams are generated from the same white color light source but it differs from the latter in point of using a variable color filter 311 for color separation and pulse modulation. This color filter is a device which can vary the transmission wavelength thereof and such variation can be realized by, for example, changing the length of a Fabry-Perot etalon resonator with some means. With this device, if the transmission wavelength is varied with time for each of the above-mentioned three time zones so as to become, for example, R, G and B, respectively, it is possible to realize a color image input optical system by time sharing.

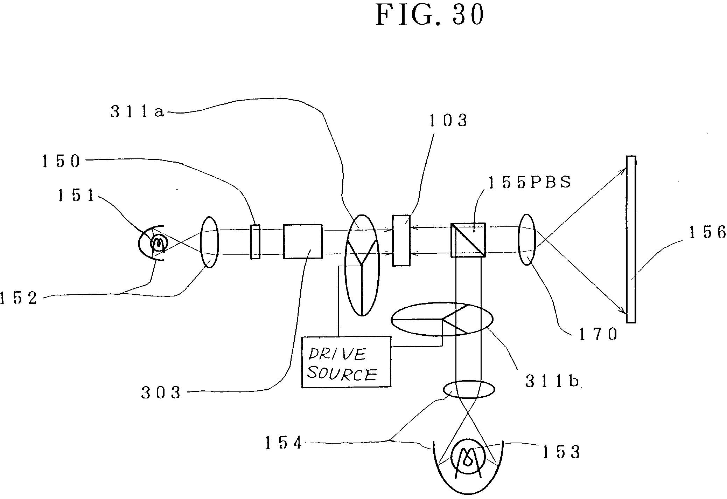

Fig. 30 shows the structure of another embodiment comprising time-sharing color image input and output optical systems which embodiment will now be described in detail.

In Fig. 30, the spatial optical modulator is the optical write type liquid crystal spatial optical modulator 103. The input optical system comprises a write light source 151, a parallel optical system 152 for collimating the light from the write light source and equalizing the intensity of the light and an input image-forming system 303 for imaging the light flux from the write light source 153 on the write surface of the optical write type liquid crystal spatial optical modulator via the above-mentioned parallel optical system 152. Further, the output optical system comprises a read light source 153, a parallel optical system 154 for collimating the light from the read light source 153 and equalizing the intensity of light, a PBS 155 transmitting the light flux after reading and an output projection lens system 170 for imaging on an output image surface 156 the light flux of the output image transmitted through the PBS 155. A write color separating filter 311a as a first time-sharing color separating means has the same structure comprising three kinds of filters.

To begin with, the input optical system of the present apparatus for image-forming an output target image on the write surface of the spatial light modulator will be described.

The write light source 151 uses a white light source such as a metal halide lamp, halogen lamp or the like which generates visible light of a broad bandwidth. The light flux from the write light source 151 is substantially collimated and made to have a uniform light intensity distribution by the parallel optical system 152 so as to be applied to a transmissive input image medium 150 carrying the target image. After passing through this medium 150, the light flux of the input image is inputted to the write color separating filter 311a through an input image-forming system 303.

The write color separating filter 311a is disklike and has its disk surface held perpendicular to the optical axis of the light flux of the input image. Further, the write color separating filter 311a, for example, time-shares white light and separates it into three primary colors of red, green and blue (hereinafter referred to "R" for red, "G" for green and "B" for blue). It comprises three kinds of dichroic filters each transmitting only a single color component (i.e., an R filter transmitting only a R - color component, a G filter transmitting only a G-color component and a B filter transmitting only a B-color component). These filters are arranged in sequence in three equally-divided sectors of a disk.

Further, the above-mentioned white color separating filter 311a is so constructed that it is driven by a pulse motor as a drive source directly or through a gear train or a belt so as to rotate about the center of a circle in the counter-clockwise direction when viewed from the inputting direction of a light flux. Further, the filter 311a has its rotary axis so arranged that as the filter 311a rotates, the three kinds of filters are held perpendicular to the optical axis of the light flux of the input image in sequence.

The light flux of the input image is allowed to become incident upon any one of the R filter, the G filter and the B filter of the write color separating filter 311a so that only a single color component (e.g., the R component in this case) is separated from the light flux of the input image and is allowed to pass through the related filter (i.e., the R filter in this case). The light flux of the R-component thus separated forms its image on the write surface of the optical write type liquid crystal optical modulator 103.

In Fig. 30, the write color separating filter 311a is arranged between the input image forming system 303 and the spatial optical modulator 103 but it may be arranged between the input image medium 150 and the input image forming system 303 or within the input image forming system 303. Further, although, in the instant embodiment, the write color separating filter 311a is divided into three equal parts, since it makes use of three kinds of dichroic filters, the present invention is not limited thereto and therefore, it is possible to modify it to suit the intended purposes with respect to the number of filters, the order of arrangement and the area of each of the filters. For example, as regards the number of filters, the write color separating filter 311a may be comprised of any number of filters only if the three kinds of filters come to lie at the optical axis of the light flux of the input image in sequence as the write color separating filter 311a rotates. Further, as regards the manner of filter arrangement, there is no limitation on the order of the three kinds of filters only if the permuted three filters are R, G and B filters, respectively. Moreover, as regards the area ratios among these filters, there is also no limitation thereon only if an area larger than the sectional area of the light flux of the input image is secured for each of the filters. For example, it is possible to make the amount of transmission of the light flux through the B filter two times that of the R or G filter in such a manner that the area of the B filter having a low rate of transmissivity is made to be two times that of the R or G filter and the write color separating filter 311a is rotated continuously.

Next, the output optical system for finally forming the written image on the write surface of the spatial light modulator in the above-described process by the apparatus of the present invention will be described.

The read light source 153 may be a LED which is a light source of a narrow bandwidth such as red, green or blue or a white light source generating visible light of a broad bandwidth such as a metallic halide lamp, halogen lamp, xenon lamp or the like. Further, it may be a coherent light source such as a semiconductor laser. In the instant embodiment, an example using a white light source will be described.

The flux of light from the read light source 153 is substantially collimated by the parallel optical system 154 and made to have a uniform light intensity distribution so as to be inputted to the read color separating filter 311b.

The read color separating filter 311b has the same structure as described with respect to the write color separating filter 311a so that the description of the structure is omitted herein. Further, the arrangement of the R, G and B filters of the read color separating filter 311b when viewed from the input side of the optical axis is the same as the arrangement of those of the write color separating filter 311a and the direction of rotation of the filter 311b when viewed from the input side is also the same as that of the filter 311a.

The read color separating filter 311b is so constructed that it has a drive source in common with the above-mentioned write color separating filter 311a and is driven through a gear train or a belt and further that the same color filters as those of the write color separating filter 311a are made to face the optical axis substantially in the same timing.

Consequently, the light flux from the read light source 153 passed through the parallel optical system 154 is inputted to the R filter as in the case of the light flux from the write light source 151. Therefore, the light flux from the read write source 153 has only the R-component selected and transmitted and thereafter, the same process is repeated with respect to the G and B filters.

In the above case, the read color separating filter 311b is disposed between the parallel optical system 154 and the PBS 155 but it may be arranged between the read light source 153 and the parallel optical system 154, between the PBS 155 and the optical write type liquid crystal spatial optical modulator 103, between the PBS 155 and the projection lens system 170 or between the projecting lens system 170 and the output image surface 156.

As described above, the S-polarized light flux applied on the read surface of the optical write type liquid crystal spatial optical modulator 103 is phase-modulated and reflected from the read surface. The light flux reflected from that surface passes through the PBS 155 again to be subjected to a conversion from phase-modulation to intensity-modulation. The intensity-modulated light flux is imaged on the output image surface 156 such as a projection screen by means of the output projection screen or the like. In this case, the read surface of the optical write type liquid crystal spatial optical modulator and the output image surface 156 are related to each other to establish an image-forming position through the output projection lens system 170. In the case of a projector or the like, the output image surface 156 is in the form of a screen and in the case of a copying machine, the output image surface 156 is in the form of an image-forming surface of a printing mechanism.

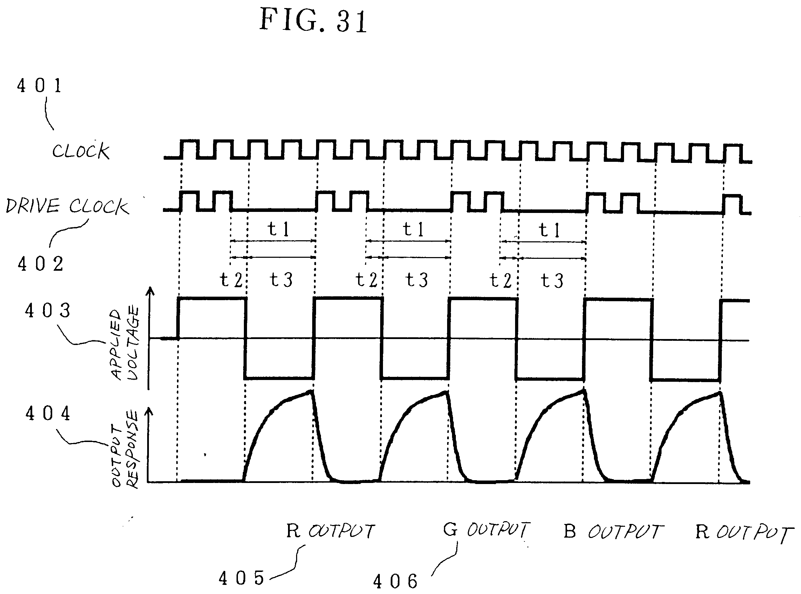

Next, the method for driving a modulation control circuit for synchronously controlling the modulation characteristics of the write color separating filter 311a, the read color separating filter 311b and the optical write type liquid crystal spatial optical modulator 103 will be described by referring to the timing chart shown in Fig. 31.

A clock 401 is a reference signal for the operation of the image output apparatus of the instant embodiment.

A clock 402 is a signal synchronized with the clock 401 and this signal is inputted to the pulse motor as a driving source for the write color separating filter 311a.

Further, an applied voltage 403 has a waveform of a driving voltage comprising positive and negative voltage pulses and is applied on the spatial optical modulator. An optical response 404 represents the response speed of the photoconductive layer of the spatial optical modulator in correspondence to the applied voltage 403, that is, a state in which an input image appears on the read surface as a result of incidence of light of a certain intensity on the photoconductive layer.

Further, the spatial optical modulator writes an image at the time of application of a negative voltage thereon and erases the image at the time of application of a positive voltage thereon.

First, the drive clock 402 is inputted to a pulse motor (not shown) and simultaneously therewith, a positive voltage is applied on the spatial modulator. The pulse motor receives as inputs two pulses of the drive clock 402 whereby the write color separating filter 311a is rotated by a predetermined amount. At this time, the R filter is located at the position coinciding with the flux of light from the input image and stops for a minute period of time t1. Further, with a delay of a minute period of time t2 after the R filter has assumed the position coinciding with the light flux of the input irnage, a negative voltage is applied on the spatial optical modulator and the R-component input image passed through the write color separating filter 311a (i.e., the R filter) is written on the write surface. In this case, the input image appears on the read surface at a response speed indicated by an R output 405 by the above-mentioned writing operation.

At the readout portion, the read color separating filter311b has a drive source in common with the write color separating filter 311a as described in the foregoing and since the driving system thereof is mechanically coupled to that of the write color separating filter 311a so as to rotate substantially in synchronism with the latter so that the read color separating filter 311b performs the same operation as the write color separating filter 311a. Accordingly, the R-component light flux from the read light source passed through the read color separating filter 311b (i.e., the R filter ) irradiates the read surface of the spatial optical modulator for a minute period of time t1 in the same timing as the write color separating filter 311a. Then the R-component read light thus emitted is caused to reflect by a dielectric mirror within the spatial light modulator through the read surface and an R-component input image proportional to the light intensity of the read light source 153 is outputted through the output optical system.

After the application of the negative voltage upon the spatial optical modulator, when a minute period of time t3 has lapsed and the writing of the R-component input image on the write surface is complete, a positive voltage is applied on the spatial modulator so that the input image is erased. Simultaneously with the application of the negative voltage upon the spatial optical modulator in the above-mentioned erasing operation, two pulses of the drive clock 402 are inputted to the pulse motor whereby the write color separating filter 311a is rotated by a predetrermined amount. At this time, the G filter is located at a position coinciding the light flux of the input image and stops for the minute period of time t1. Further, with a delay of the minute period of time after the G filter has assumed the position coinciding with the light flux from the input image, a negative voltage is applied on the spatial optical modulator and the G-component input image passed through the write color separating filter 311a (i.e., G filter in this case) is written on the write surface. In this case, the input image aapears on the read surface at a response speed indicated by a G output 406 by the above-mentioned writing operation.

At the readout portion, the read color separating filter 311b has a common drive soruce with the write color separating filter 311a as described in the foregoing and since the drive system thereof is mechanically coupled to that of the write color separating filter 311a, the read color separating filter 311b performs the same operation as the write color separating filter 311a. Accordingly, the R-component light flux from the read light source passed through the read color separating filter 311b (i.e., G filter in this case) irradiates the read surface of the spatial optical modulator for the minute period of time t1. Then the G-component read light thus emitted is caused to reflect by a dielectric mirror within the spatial optical modulator through the read surface and the G-component input image proportional to the light intensity of the read light source is outputted through the output optical system.

After the application of a negative voltage upon the spatial optical modulator, when the minute period of time t3 lapses and the writing of the G-component input image on the write surface is complete, a positive voltage is applied on the spatial optical modulator and the input image is erased. The description of the R-component write and read operations is omitted herein since the operations are the same as the B-component or G-component write and read operations.

The above-described operations are repeated in sequence for each of the filters. In this case, the drive clock 402 indicates the pulses required for rotating the write color separating filter 311a and the number of such pulses is not limited to 2.

In the methods for driving the write color separating filter 311a, the optical write type spatial optical modulator 103 and the read color separating filter 311b, both of the color separating filters are driven intermittently. In this case, if the time of incidence of the write light flux by the R filter with respect to the optical write type liquid crystal spatial optical modulator 103 is set up longer than the R-color writing time by the modulator 103, it goes without saying that the same effect can be obtained even when the color separation filters are continuously rotated, for example. Further, it is also possible that for example, the write color separating filter 311a is driven intermittently while the read color separating filter 311b is driven continuously or vice versa.

As described above, due to the rotation of the write color separating filter 311a, the time of emission of RGB three-color component light is time-shared whereby three-color separated input images are continuously formed in sequence on the write surface of the optical write type liquid crystal spatial optical modulator 103. These three-color separated input images are subjected to desired modulations for each color by the optical modulation characteristic synchronization control circuit 122 and the modulator included in the drive circuit 104 and the images appear on the read surface of the spatial optical modulator in sequence in correspondence to the respective time zones. The images subjected to the desired modulations by the spatial optical modulator are selected of their color components by the rotation of the read color separating filter 311b as in the case of the write color separating filter 311a, read out from the read light of the selected color component and image-formed on the output image surface 156 as a final output image 107 through the output projection lens system. This output image is one that is color-modulated for each color component and if the repetitive frequency of the three-color time-shared time zones is sufficietly high with respect to the color time responsiveness of the naked eye, the same effect as when the three color components are overlapped can be obtained from the sensational point of view. That is, the actual color systhesization is performed by the sense of a person viewing an output image and therefore, a visually observed image becomes a color image after synthesization. Further, by independently controlling separated three colors while time-sharing the optical modulation characteristics of the three colors, it is possible to perform the correction of color tone called color balancing after writing the input image besides the inversion of negative-positive relationship, contrast and brightness of the input image. Accordingly, it is possible to meet the scatterings of the light intensity, the sensitivity of the optical write type liquid crystal spatial optical modulator with respect to each color at the time of writing the color by the above-mentioned correcting means.

In the above embodiment, a pulse motor capable of controlling with ease the number of rotations and position of the color separating filters by input pulses is used as a driving source of, the color separating filters but the invention is not limited thereto so that for example, the position and the number of rotations of the filters may be controlled by using a servo motor.

Further, in Fig. 31, a time sharing color separation is performed by a clock of a certain frequency but the invention is not limited thereto, so that it is possible to adjust the color balance of the final image output and to correct the sensitivity of the spatial optical modulator with respect to the optical wavelengths of colors by independently controlling for each color the time of emission of the light flux of color components according to color information.

Lastly, an embodiment of an output optical system for forming an image appearing on the read surface of the spatial optical modulator on the output image surface of the modulator will be described by referring to the related drawing.

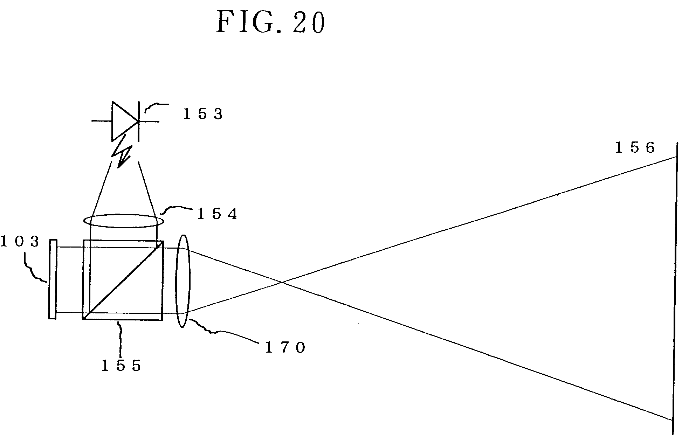

Fig. 20 is a block diagram showing the basic structure of the output optical system according to the present invention. For a read light source 153, a LED which is a light source of a narrow bandwidth such as red or green, or a white light as stated source generating wide bandwidth visible light such as a metal halide or halogen lamp, may be used. Further, it may be a coherent light source such as a semiconductor laser. The light beam substantially collimated by the parallel optical system 154 is separated into a P-polarized beam and a S-polarized beam by a polarized beam splitter 155 (hereinafter referred to as " PBS "). The S-polarized light beam separated and reflected by the PBS 155 is applied to the read surface of the optical write type spatial optical modulator 103. In Fig. 20, the structure of using only the S-polarized light beam separated by the PBS 155 is shown but it is of course possible to use an optical system making use of the P-polarized light beam. The optical write type spatial optical modulator 103 is so constructed that the direction of orientation of the liquid crystal and the direction of the optical axis of the electrooptical crystal are adjusted in advance so that the modulation of phase can be performed when the S-polarized light beam is applied on the read surface of the modulator.

As described above, the S-polarized light beam applied to the read surface of the optical write type spatial optical modulator 103 is reflected by being phase-modulated according to the image applied on the write surface of the modulator 103 and the modulation characteristics of the modulator 103. The light beam reflected from the read surface is converted from phase modulation to intensity modulation by again passing through the PBS 155. The intensity-modulated light beam forms its image on the output image surface 156 such as a screen by the output image forming system 170. In this case, the read surface of the optical write type spatial optical modulator 103 and the output image surface 156 are in image-forming positional relationship with each other with respect to the output image forming system 170. In the case of a projector or the like, the output image surface is a screen and in the case of a copying machine, it is the image forming surface of a printing mechanism.

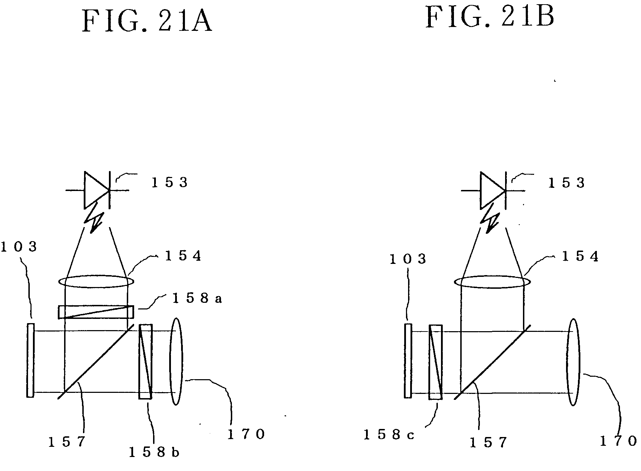

In the above embodiment, the PBS 155 performs the three functions of: (1) separating the optical path of the readout incident beam from that of the reflected beam; (2) polarizing the readout incident beam; and (3) analyzing the readout reflecting beam but it is also possible to cause these functions to be shared by different component parts. Fig. 21 is a block diagram of an embodiment of such an arrangement as this. Fig. 21 (a) shows a case in which a half mirror is used for performing the above-mentioned function (1) and a polarizing plate is used for performing each of the above-mentioned functions (2) and (3) and Fig. 2 (b) shows a case in which a single polarizing plate is commonly used for performing the above-mentioned functions (2) and (3).

In Fig. 21 (a), the substantially parallel light beam from the read light source becomes incident upon a half mirror 157 as the light beam polarized by the polarizer 158a to be divided into two light beams one of which is then applied to the read surface of the optical write type spatial optical modulator 103. The phase-modulated light beam reflecting from the read surface of the modulator 103 is separated into the two light beams by the half mirror 157 and one of the light beams is then converted to intensity modulation by the analyzer 158b. With the above structure, the same operation as that of the structure shown in Fig. 20 is made possible. Further, as shown in Fig. 21 (b), it is also possible to use the single polarizing plate 158c as serving the functions of the analyzers 158a and 158b and to arrange it in the optical path between the half mirror 157 and the modulator 103.

As regards the relationship between the negative and positive reading functions of the modulation characteristics of the optical write type spatial optical modulator, it can be altered not only by changing the driving method of the modulator but also by changing the optical system. The first method is to rotate the modulator in a plane perpendicular to the optical axis of the modulator. For example, in a state in which a positive image is readable, when the modulator is rotated by 90 degrees in a plane perpendicular to the optical axis of the modulator, the image becomes readable in a negative form. Further, when the modulator is rotated further by 90 degrees, the positive image again becomes readable. This method is possible by any of the optical systems in Fig. 20 and Figs. 21 (a) and (b).

The second method is to change the relationship between the polarizer and the analyzer. For example, when the PBS is used as in the case of the embodiment shown in Fig. 20, the relationship between the polarizer and the analyzer becomes a cross nicol and that in Fig. 21 (b) is a parallel nicol so that both of them can not be changed. However, in the case of the embodiment shown in Fig. 21 (a), it can be changed. For example, where the polarizer 158a and the analyzer 158b make a cross nicol, when any one of the polarizer 158 (a) and the analyzer 158 (b) is rotated by 90 degrees in a positive image readable state so that both of the elements make a parallel nicol, the reading of the image in a negative form becomes possible. Further, when the rotated element is further rotated by 90 degrees to allow both of the elements to make a parallel nicol, the reading of the image in a positive form becomes possible.

With the above structure, the image applied to the write surface of the optical write type spatial optical modulator 103 can be projected on the output image surface 156 by intentionally changing the modulation characteristics of the modulator through the control circuit 105 so that the image is subjected to desired processings such as the inversion of the negative-positive relationship of the image, alteration of the gamma characteristic and etc. In this case, the projected image may be monochroic or narrow bandwidth image or black-and -white image according to the spectral distribution of the light beam from the read light source 153.

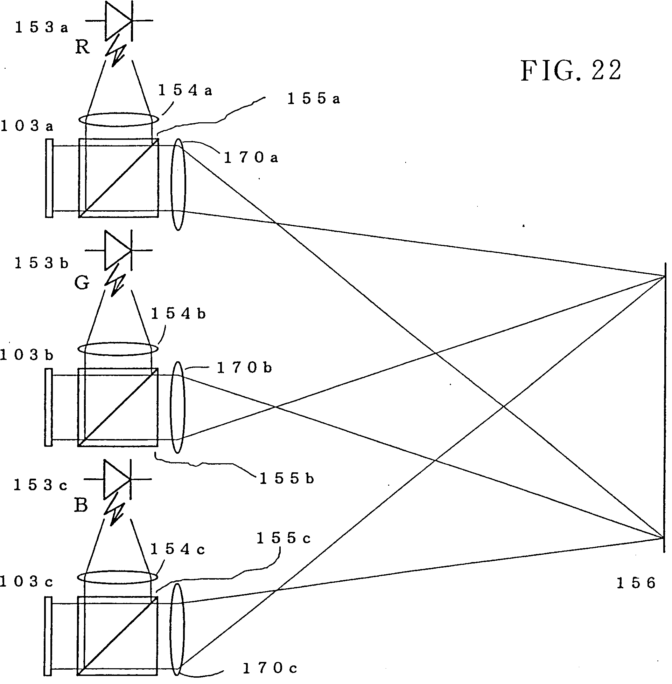

With Fig. 20, the structure of the embodiment outputting a monochroic or black-and-white image without color-separating the light beam emitted from the read light source has been described. Next, the structure of the color image output system will be described by referring to Fig. 22. For the sake of simplicity of explanation, a case is described in which the synthesization of three colors of red (R), green (G) and blue (B) is performed for outputting a color image. It is of course also possible to perform the synthesization of three colors of cyan (C),magenta (M) and yellow (Y).

First, an embodiment of the color image output optical system by space sharing will be described by referring to the drawing. In this case, it is assumed that there be arranged three sheets of optical write type spatial optical modulators 103a - 103c for the three colors of RGB with each of the modulators having an image corresponding to each of the colors written at its input optical system. Further, it is also assumed that each of the modulators be adjusted to have desired modulation characteristics for each color.

Fig. 22 is a block diagram of one embodiment of a color image output optical system by space sharing. The instant embodiment is basically so constructed that color image output optical systems each identical with the embodiment shown in Fig. 20 are arranged parallelly for three colors RGB and the images corresponding respectively to the colors RGB are overlapped on the image-forming output image surface 156 for color synthesization thereby outputting a color image. Accordingly, in the instant embodiment, there are provided read light sources 153a -153c, parallel optical systems 154a - 154c, PBS 155a - 155c and output projecting lens systems 170a - 170c for the colors RGB, respectively. As a light source for each of the colors RGB, a gas laser, a semiconductor laser or a LED may be used.

Further, it is also possible that the light beams emitted from the white light sources prepared for the colors RGB are passed through the respective color filters to provide light sources for RGB. Where the synthesization of colors is performed on the output image surface, the output projecting lens systems 170a -170c for the colors RGB are adjusted so that the respective images are required to be accurately overlapped. However, as described hereinbefore with respect to the operation of the apparatus of the present invention, where the output image is inputted to a printer or other image processing apparatus, the synthesization of colors is not always required to be performed on the same output surface. Further, the light beam used for outputting each of the color separated images is not always limited to have a wavelength equal to the wavelength itself of each of the RGB and so, for example, it can be considered that the light beam should have a wavelength with which the sensitivity of the photosensitive body of a printer corresponding to each color is at the maximum.

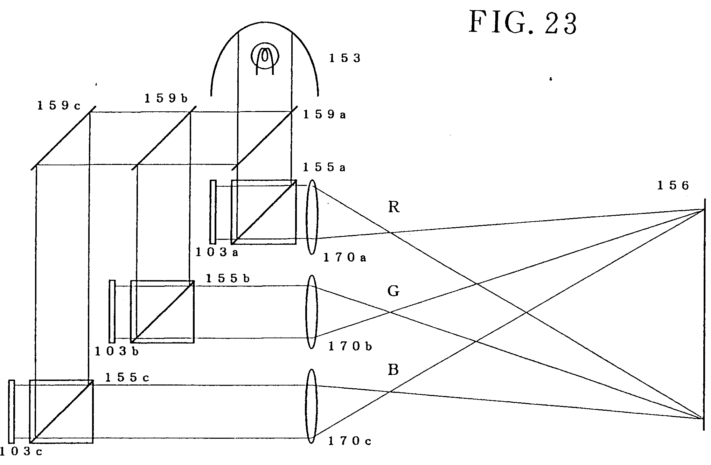

Fig. 23 is a block diagram of another embodiment of the color image output optical system by space sharing. In the instant embodiment, instead of using light sources for the three colors RGB, the light beam from the single white light source 153 is separated into RGB light beams by a color separating mechanism. As the light source, a white light source such as a metal halide lamp, a halogen lamp or a xenon lamp capable of emitting visible light is used. The color separated light beams are used for three-division space sharing color image output system of the same structure as that shown in Fig. 22.

In the embodiments shown in Figs. 22 and 23, the synthesization of colors for outputting a color image is performed on the output image surface but since it can be performed in the output optical system, the following structure will now be described in this regard.

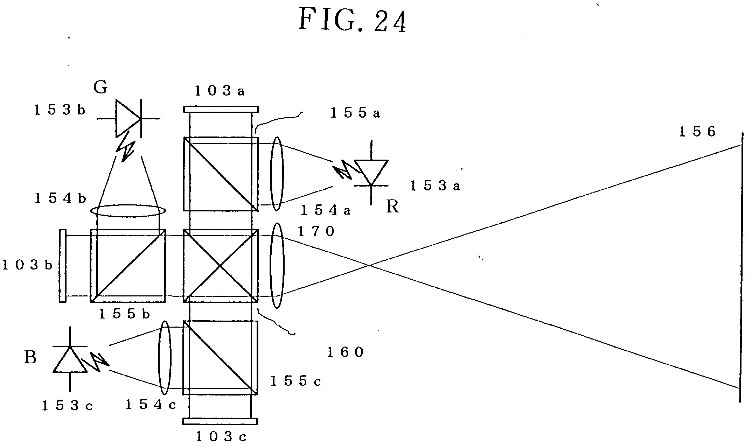

Fig. 24 is a block diagram of a still another embodiment of the color image output optical system by time sharing used in the present invention. The part of the structure for processing the image displayed on each of the optical write type spatial optical modulators to intensity-modulated images after reading them by the light beam of each color is the same as in the case of the structure shown in Fig. 22 so that the description thereof is omitted herein. The readout light beam corresponding to each color becomes incident upon the plane of incident of a dichroic prism 160 for each color and outputted from the plane of emission after it is synthesized with the light beams corresponding to the other colors. Therefore, when the synthesized light beam is image-formed on the output image surface by a single output projecting lens system, it is possible to project a color image on that output image surface.

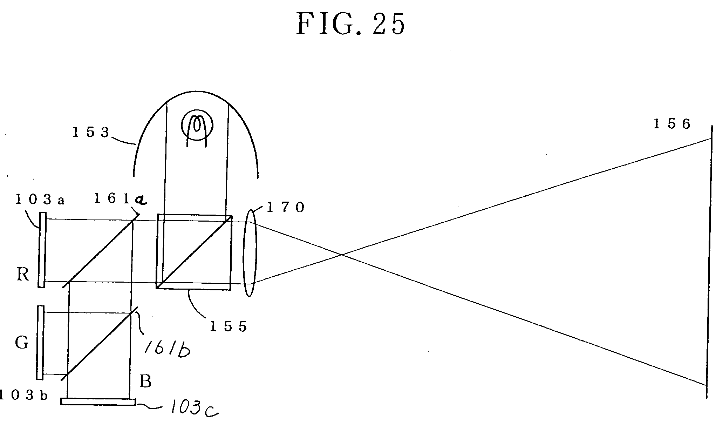

Fig. 25 shows the structure of a further embodiment of the color image output optical system by space sharing used in the present invention. In this embodiment, after the light beam from the single white light source 153 is polarized and the optical path thereof is deflected, the color separation by space sharing is performed on the light beam by using the dichroic mirrors 161a and 161b so that the light beam is inputted to the three-system optical write type spatial optical modulators as read beams. The three light beams thus read out are color-synthesized again by the dichroic mirrors 161a and 161b and analyzed by the PBS 155 to thereby provide a color image output.

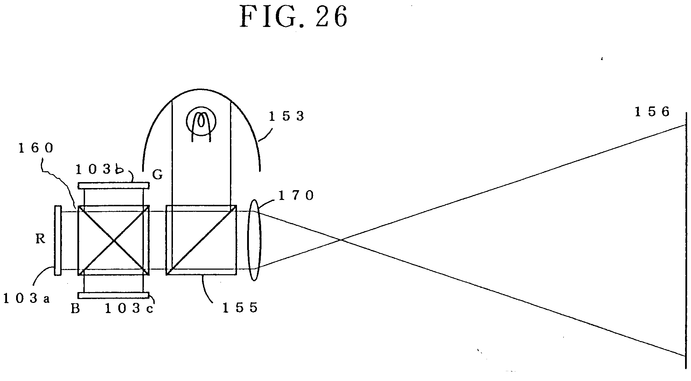

In a still further embodiment of the color image output optical system by space sharing shown in Fig. 26, the dichroic prism 160 is used instead of the dichroic mirror used in the embodiment of Fig. 25 but no difference between the two embodiments regarding the remaining point.

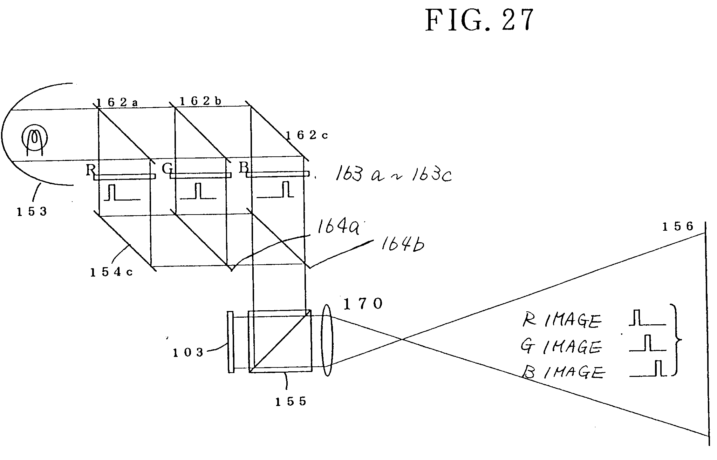

Next, an embodiment of the color image output optical system by time sharing will be described. In the embodiment shown in Fig. 27, the light beam from the white light source is once color-separated by dichroic mirrors 162a and 162b and three color light beams which are respectively allotted to three different time zones and pulsatively modulated are produced by the three liquid crystal shutters 163a through 163c independently prepared for the color light beams. These light beams are again color-synthesized by dichroic mirrors 164a and 164b and the synthesized light beam is supplied to the basic structure of Fig. 20 as a time sharing color separated read light beam. Thus, when the color separating pulse of the read light beam is synchronized with that of the write color separating pulse, the color separating write and read operations can be performed.

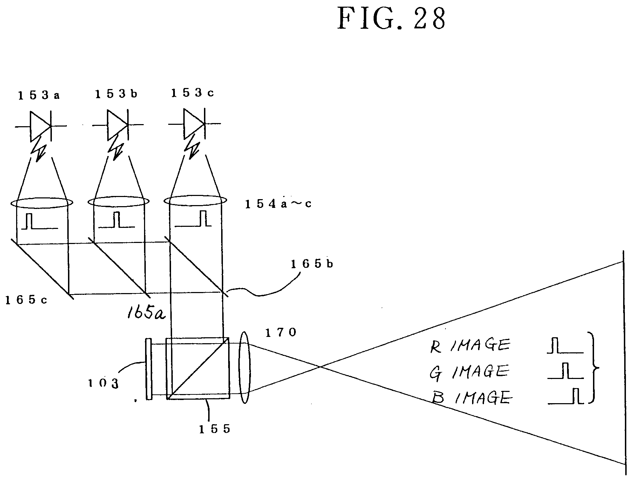

An embodiment shown in Fig. 28 is constructed such that the color image output optical system is formed by using three color different monochroic or narrow bandwidth light sources. The light beams from these three color light sources are color-synthesized by dichroic mirrors 165a and 165b so as to be supplied to the basic structure shown in Fig. 20 as a time sharing color separated read beam. The remaining portion of the structure is the same as in the case of the embodiment shown in Fig. 27.

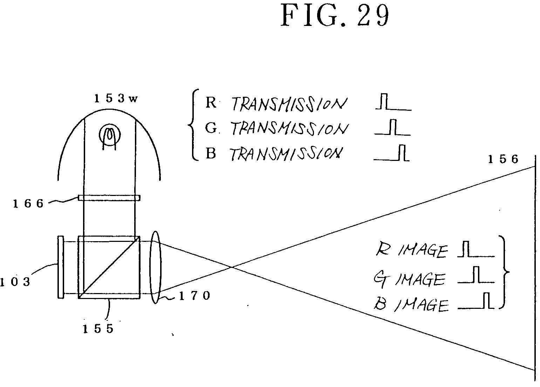

A still further embodiment of the color image output optical system by time sharing is shown in Fig. 29. In this embodiment, the light beam from the white light source is color-modulated by a variable color filter 166 to produce time shared pulsative color separating read light beams respectively allotted to different time zones. This embodiment is the same as those shown in Figs. 27 and 28 in that these read beams are supplied to the basic structure shown in Fig. 20.

Next, an embodiment of a copying machine using a monochromic output electronic photographic recording system applying the above-mentioned input optical system and the output optical system will be described.

Fig. 36 is an illustrative view of the basic structure of an image input system of the copying machine which reads out an original.

Reference numeral 150 designates an input image medium carrying a target image and this input image medium is hereinafter referred to as the "original". The original 150 is arranged to have its image surface facing a glass table 502. Further, on the side of the rear surface (non-image surface) of the original there is arranged a reflecting plate 503 so that when the original is pressed with a predetermined pressure, it becomes flat with respect to the reflecting plate 503 allowing the beam from a write light source 151. For the write light source 151, a white light source such as a metal halide lamp, halogen lamp, xenon lamp or the like capable of generating visible light of a wide bandwidth but the invention is not limited thereto and any light source may be used only if it emits light of a waveform corresponding to the spectral sensitivity of a photoconductive layer 209 of a spatial optical modulator 103. The light beam from the write light source 151 is substantially collimated with a uniform light intensity distribution, illuminates the original 150 and the beam of the positive image of the original 150 is read out by the reflection of the light from the light source 151.

In the instant embodiment, a material such as a document, a photographic print or the like having a solid surface is used for an original as an input image medium but even by using a translucent input image medium such as a negative film, positive film, OHP or liquid crystal display element, it is possible to read out the original image by the reflecting light from the reflecting plate on the side of the rear surface of the original. Further, with the translucent input image medium, it is possible to read out with ease the original image by the provision of a read light source at the rear surface of the original.

The light beam of the positive image of the original formed of the reflecting light resulting from the illumination of the original 150 forms an image on the write surface of the spatial optical modulator 103 through an input image system 102. Then the image is modulated by the characteristic of the above-mentioned spatial optical modulator 103 and the original image formed on the write surface of the modulator 103 is outputted on the read surface thereof. The image outputted in this case is the positive image of the original.

Further, as indicated by the description of the spatial optical modulator 103, by controlling the optical modulation characteristic of the modulator with the optical modulation control circuit 105, it is possible to adjust the contrast, brightness and resolution of the original image on the read surface as required and to perform the reproduction of colors faithful to the original.

Next, the image writing system will be described which reads out as optical information the original image on the read surface of the spatial optical modulator 103 and outputs it to the image recording system.

Like the write light source 151, a read light source 153 makes use of a white light source generating visible light of wide bandwidth such as a metal halide lamp, halogen lamp and xenon lamp and etc. but the present invention is not limited thereto but any light source may be used only if it emits light of a wavelength corresponding to the spectral sensitivity of the photosensitive layer of the photosensitive body 501. The light beam from the read light source 153 is substantially collimated with a uniform intensity distribution and inputted to a polarized beam splitter 155. The light beam thus inputted is separated into a P-polarized beam and a S-polarized beam and the separated and reflected S-polarized beam illuminates the read surface of the spatial optical modulator 103. Then the S-polarized beam applied on the read surface of the spatial optical modulator 103 is phase-modulated to reflect from the read surface so as to become a positive image of the original. After that, the reflected beam is passed through the polarized beam splitter 155 is subjected to a light-intensity modulation from the phase-modulation and is outputted to the image recording system through an output image-forming system 505.

Further, if the output image-forming system 505 is provided with a zooming function capable of varying the enlargement ratio of projection, it is possible to generate an image enlarged or reduced to a desired multiplying power.

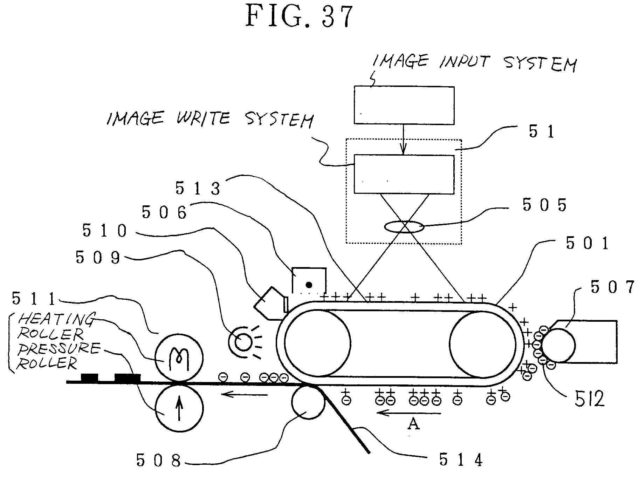

Next, the basic structure of the image recording system for printing the original image outputted by the image writing system will be described by referring to Fig. 37.

The functional medium of the image recording system of the instant embodiment is the photosensitive body 501 which comprises a basic conductive layer and a semiconductor photosensitive layer laminated on the former.

In the instant embodiment, in order to expose the entire original image onto the photosensitive body 501 by the image writing system, the exposure surface 513 of the photosensitive body 501 opposing the outputting of the original image is required to secure a sufficient area of exposure. Further, in the instant embodiment, the positive image of the original is applied to the surface of the photosensitive body 501. Accordingly, the positive development method as a developing system will be described.

The photosensitive body 501 comprises a thin polyethylene terephthalate film as a base, an aluminum layer deposited on the terephthalate film and an optical semiconductor layer such as selenium, OPC or the like having a positive charge polarity laminated on the aluminum deposited layer. Further, the photosensitive body 501 is of a flexible belt type and the aluminum-deposited layer of the photosensitive body 501 is exposed outside at the end face portion of the photosensitive body corresponding to one round of the body 501 so as to allow a metallic brush to come into contact with the exposed surface from outside with the metallic brush connected to the ground terminal of the entire apparatus.

On the inner peripheral surface of the photosensitive body 501 there are provided a pair of rollers so that the photosensitive body 501 is held in position by being applied with a suitable tensile force and when one of the rollers is rotated by a drive source such as a motor, the photosensitive body 501 is rotated in the direction of the arrow due to a frictional force generating between the surface of the photosensitive body and that of the rotating roller.

As the photosensitive body 501 serves as an insulating member in the dark, it retains a predetermined charge through a charger 506 to be described hereinbelow and at the optical energy exposure portion of an exposure device 518 to be described later, it drives the electric charge transferred to the aluminum film layer in the photosensitive layer to the ground terminal of the apparatus via the metallic brush.

Around the photosensitive body 501 there are arranged the charger 506, an exposure device 518, a developer 507, a transfer device 508, a charge eliminator 509 and a cleaner 510 in sequence in the rotational direction of the photo-sensitive body.

Next, the operation of the image recording system during its recording process will be described.

First, a positive high voltage is applied on the charger 506 while the photosensitive body 501 is rotated in the direction of the arrow in the dark so that the surface of the photosensitive body 501 is positively charged uniformly. Thus, when the charged portion of the surface of the photosensitive body 501 comes to the exposure surface 513 opposing the exposure device 518, the photosensitive body 501 is stopped. Then the beam of the positive image of the original obtained by the image input system through the exposure device 518 is image-formed on the exposure surface 513 of the photosensitive body 501 now being held stationary and by this process, the charge on the blank portion at the background of the original image goes down to the ground of the apparatus through the aluminum-deposited layer and the metallic brush contacting the layer. Consequently, the positive charge remains only on the image portion on the photosensitive body 501 thereby forming an electrostatic latent image. After the formation of the latent image, the photosensitive body 501 is again driven in the direction of the arrow to transfer the latent image to the developing section and then the latent image comes into contact with the magnetic brush formed by the toner 512 at the developing section so that the electric field extending outwardly of the latent image portion attracts the negatively charged toner 512 whose polarity is reversed to that of the charge of the latent image whereby the latent image portion is adhered with the toner 512 to visualize the latent image.

Next, the recording paper 514 is laid over the visualized toner image on the photosensitive body 501, a positive high voltage of a polarity reversed to that of the toner 512 is applied by the transfer device 508 from behind the recording paper 514 and the toner 512 is attracted to the recording paper 514 due to the electrostatic force to thereby transfer the image to the recording paper. The recording paper 514 having the toner image transferred thereto is carried to a paper carriage system (not shown) to the fixing device 511. The recording paper 514 is then applied with thermal energy and a pressure between a heat roller and a pressure roller and the toner 512 forming the toner image on the recording paper 514 is fusion-bonded to the recording paper 514 as a permanent image. On the other hand, the electrostatic latent image remaining on the photosensitive body 501 is eliminated due to the exposure by the charge eliminator 509. Further, the residual toner remained on the photosensitive body 501 is eliminated by the cleaner 510. By repeating a series of processes from charging to cleaning, a printing operation can be performed continuously.

In the instant embodiment, in order to secure the required amount of energy with respect to the sensitivity of the photosensitive body, the driving of the photosensitive body 501 is once halted but it is also possible to drive the photosensitive body 501 continuously by exposing the original image to the photosensitive body for a minute period of time by using a light source such as a photosensitive body of a high degree of sensitivity or a flash lamp having strong optical energy thereby further increasing the printing speed.

Further, in the instant embodiment, the positive developing method is used as a developing system but it is of course possible to use a reverse developing method by selecting the charging polarity of the photosensitive body or toner on the bases of materials since it is possible to perform negative-positive inversion by controlling the optical modulation characteristic of the spatial optical modulator 103. However, the positive developing method and the reverse developing system have different recording characteristics such as the final dot configuration on the recording paper so that it is important to select them according to intended purposes.

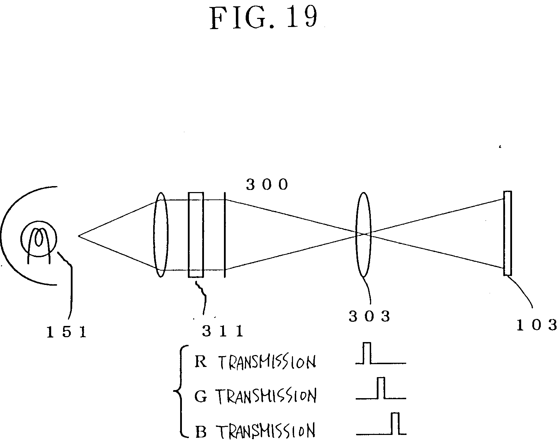

Where a color image is outputted, the image input system is formed as shown in Figs. 14 through 19, the image writing system is formed as shown in Figs.

22 through 29 and the image recording system is formed in the same manner as the prior art color outputting electronic photographic system. However, in the image recording system in this case, it is necessary to constitute the photosensitive body as a functional medium with a mechanism capable of securing the area of exposure of the original image as in the case of the above-mentioned monochromic output electronic photographic system.

In the foregoing, a description is made of an embodiment of a copying machine using a functional medium as a photosensitive body and an electronic photographic recording system as an image recording system but the present invention is not limited thereto. Therefore, in the case of the image output apparatus, it is possible to realize a high-speed printing operation and a high-quality output image by using the image input system and the image writing system of the present invention only if the image recording system is of the recording system in which the original image is written on the functional medium by light or thermal energy. It goes without saying, therefore, that the same effects as those of the present invention can be obtained by using the image input system and the image writing system of the present invention for the recording systems other than the above-described embodiment, for example, the thermal transfer recording system, TA system, optical magnetography or silver salt recording system.

Further, although the above-described embodiment is of the type that reads and prints the image on the input image medium, it is natural that the present invention is also applicable to such an image output apparatus as a printer or a facsimile by forming an input image medium with a liquid crystal display body or CRT which is capable of displaying the image data of the original image transmitted from outside the apparatus.

As described above, the present invention provides an image output apparatus comprising a spatial optical modulator, a drive circuit, an input optical system for forming an input target image on the write surface of the spatial optical modulator and an output optical system for allowing the image on the read surface of the modulator to be formed on the final output surface of the apparatus. The present invention has made it possible to correct the deterioration of input image information and to adjust the quality of the output image according to the intended purposes by additionally providing at a part of the drive circuit a control circuit for controlling the modulation characteristics of the spatial optical modulator. Particularly, the invention has the effects that in the case of an embodiment of the invention which is provided with a space sharing or time sharing color separating system and three systems of independent spatial optical modulation characteristic control circuits corresponding thereto, the adjustment of color tones can be performed and at the same time, a high brightness output image can be obtained by the light amplifying operation of the spatial optical modulator.

Further, in the time sharing, it is possible with a single input optical system or output system and a spatial optical modulator to output a color image. Consequently, the number of parts of the optical system is sharply reduced, the apparatus as a whole can be miniaturised and the manufacturing cost can be reduced. Further, since the color image is outputted through the same optical system, no adverse effect such as color offsetting due to an aberration of the optical system taking place at the time of synthesisation of color components arises and a high quality image output can be realised. To add to these effects, since the present invention does not require any final image synthesisation by the optical system at the time of manufacture of the image output apparatus as has conventionally been the case, the working efficiency in the assembly and adjustment of the apparatus is sharply improved.

The image output apparatus of the present invention comprises a functional medium for forming thereon a latent image of the output image generated from the output optical system, recording means for visualize and outputs on the recording medium the latent image formed on the functional medium and control means for controlling the modulation characteristic of the above-mentioned spatial optical modulator so that the following effects are derived therefrom. (1) It is possible to adjust the optical intensity by the light amplification of the spatial optical modulator in the image writing system in compliance with the kind of the original and the optical or thermal sensitivity of the functional medium. Accordingly, it is possible to use a functional medium having a low level of optical or thermal sensitivity thereby reducing the manufacturing cost of the apparatus.

(2) Since it is possible with the image input system to read the original image two-dimensionally without scanning the input image medium and also possible with the image writing system to write the original image two-dimensionally with respect to the functional medium, the printing speed can be accelerated.

(3) Since the image information read out from optical information in the image input system and the image writing system is outputted per se as optical information, the lacking of a high spatial frequency component is controlled to a minimum and also since the original image on the read surface of the spatial optical modulator is not pixel-shared, a high-resolution image can be outputted at the time of reading the original image. Further, since the print output can be optimised by controlling the optical modulation characteristic of the spatial optical modulator, it can be reproduced faithfully to the original thereby improving the image quality of the print output.

In one aspect, this invention provides an image output apparatus comprising: a spatial optical modulator; an optical system for writing an input target image on a write surface of the spatial optical modulator (hereinafter referred to as "an input optical system"); an optical system for forming the image on a read surface of the spatial optical modulator on a final output surface of the apparatus (hereinafter referred to as "an output optical system"); and a drive circuit, wherein the drive circuit is provided at a portion thereof with a control circuit for controlling the modulation characteristic of the spatial optical modulator in accordance with the output condition of the image.

The aforegoing description has been given by way of example only and it will be appreciated by a person skilled in the art that modifications can be made without departing from the scope of the present invention.

**Claims**

1. An image output apparatus characterised by comprising: a spatial optical modulator (103); an input optical system (102) for writing an input target image (101) on a write surface of the spatial optical modulator; an output optical system (106) for forming the image on a read surface of the spatial optical modulator on a final output surface of the apparatus; and a drive circuit (104), the drive circuit being provided at a portion thereof with a control circuit (105) for controlling the modulation characteristic of the spatial optical modulator in accordance with the output condition of the image.

2. An image output apparatus according to Claim 1, wherein said input optical system includes therein a space sharing colour separating optical system (110) for separating colour information on said input target image into three colours and said drive circuit includes therein a modulation control circuit (112) for independently controlling the modulation characteristic of said spatial optical modulator in correspondence to said separated three colours.

3. An image output apparatus according to Claim 1, wherein said input optical system includes therein a timesharing colour separating system (120) for separating colour information on said input target image and said drive circuit includes therein a modulation control circuit (112) for independently and synchronously controlling the modulation characteristic of said spatial optical modulator in correspondence to said time-sharing colour separated three colours.

4. An image output apparatus according to any one of Claim 1 to 3, which is provided with a functional medium for forming thereon a latent image of an output image generated from said output optical system and recording means for outputting said latent image on said functional medium so as to be visualised and outputted on a recording medium.

5. An image output apparatus according to Claim 4, wherein said functional medium is formed of a semiconductor, a photosetting resin, a photosensitive resin (photoresist), a thermofusible resin or a thermosensitive coupling material.

6. An image output apparatus according to Claim 5, wherein said functional medium is laminated on said recording medium.

FIG. 1

101  102  108  103  109  106  107

104  105

FIG. 2

# FIG. 3

# FIG. 4

PRIOR ART

ILLUMINATION LIGHT

ENLARGEMENT-PROJECTION LENS

OUTPUT TARGET IMAGE

PROJECTION SCREEN

# FIG. 5

PRIOR ART

ILLUMINATION LIGHT

OUTPUT
TARGET
IMAGE

SCANNING TYPE
IMAGE DEVICE

VIDEO SIGNAL DISPLAY
APPARATUS

# FIG. 6

# FIG. 7

# FIG. 8

EP 0 679 036 A2

# FIG. 9

33

FIG. 10A

FIG. 10B

FIG. 10C

# FIG. 11

FIG. 12

151    152    300    303    103

FIG. 13A

FIG. 13B

FIG. 14

# FIG.15

EP 0 679 036 A2

# FIG. 16

# FIG. 17

EP 0 679 036 A2

FIG. 18

FIG. 19

FIG. 20

FIG. 21A

FIG. 21B

FIG. 22

153a
R

154a
103a
155a
170a

153b
G

154b
103b
170b

155b

153c
B

154c
103c
155c
170c

156

EP 0 679 036 A2

FIG. 23

FIG. 24

EP 0 679 036 A2

# FIG. 25

EP 0 679 036 A2

# FIG. 26

# FIG. 27

EP 0 679 036 A2

# FIG. 28

153a  153b  153c

154a～c

165c  165a  165b

170

103

155

R IMAGE
G IMAGE
B IMAGE

EP 0 679 036 A2

# FIG. 29

153w

166

103

155

170

R. TRANSMISSION

G. TRANSMISSION

B TRANSMISSION

156

R IMAGE

G IMAGE

B IMAGE

# FIG. 30

EP 0 679 036 A2

# FIG. 31

401 CLOCK

DRIVE CLOCK

402

t 1    t 1    t 1

t 2 | t 3    t 2 | t 3    t 2 | t 3

403 APPLIED VOLTAGE

404 OUTPUT RESPONSE

R OUTPUT    G OUTPUT    B OUTPUT    R OUTPUT

405    406

EP 0 679 036 A2

55

# FIG. 32A

PRIOR ART

602

150

601

501

# FIG. 32B

PRIOR ART

302

150

601

501

EP 0 679 036 A2

# FIG. 33

PRIOR ART

# FIG. 34

PRIOR ART

# FIG. 35
PRIOR ART

# FIG. 36

# FIG. 37

IMAGE INPUT SYSTEM

IMAGE WRITE SYSTEM

5 1

5 1 3
5 0 6
5 1 0
5 0 9
5 0 5
5 0 1
5 0 7

5 1 1

{ HEATING ROLLER
PRESSURE ROLLER

512

5 0 8

5 1 4

A